# EUROPEAN PATENT SPECIFICATION

(11) **EP 4 411 645 B1**
(45) Date of publication and mention of the grant of the patent: **04.11.2026**
(21) Application number: 22897851.6
(22) Date of filing: 23.11.2022
(51) Int. Cl.: G06T 3/40

(54) **IMAGE PROCESSING METHOD AND APPARATUS**
BILDVERARBEITUNGSVERFAHREN UND -VORRICHTUNG
PROCÉDÉ ET APPAREIL DE TRAITEMENT D'IMAGE

(30) Priority: 27.11.2021 CN 202111449229
(43) Date of publication of application: 07.08.2024
(73) Proprietor: Huawei Technologies Co., Ltd., Shenzhen, Guangdong 518129 (CN)
(72) Inventor: HU, Xiangyu, Shenzhen, Guangdong 518129 (CN); XU, Weiwei, Shenzhen, Guangdong 518129 (CN); WEN, Jinsong, Shenzhen, Guangdong 518129 (CN); JIA, Yanbing, Shenzhen, Guangdong 518129 (CN); ZHOU, Jiantong, Shenzhen, Guangdong 518129 (CN); ZHAI, Qiyan, Shenzhen, Guangdong 518129 (CN); YU, Quanhe, Shenzhen, Guangdong 518129 (CN); ZENG, Yihua, Shenzhen, Guangdong 518129 (CN); WANG, Zizhong, Shenzhen, Guangdong 518129 (CN); WANG, Yichuan, Shenzhen, Guangdong 518129 (CN); CHEN, Hu, Shenzhen, Guangdong 518129 (CN); AI, Jinqin, Shenzhen, Guangdong 518129 (CN); HU, Yutong, Shenzhen, Guangdong 518129 (CN)
(74) Representative: Grünecker Patent- und Rechtsanwälte PartG mbB
(86) International application number: PCT/CN2022/133761
(87) International publication number: WO 2023/093768

(56) References cited:
- WO-A1-2016/063234
- CN-A- 101 592 729
- CN-A- 107 153 500
- CN-A- 111 324 270
- CN-A- 111 489 294
- JP-A- 2015 033 019
- US-A1- 2015 078 678
- US-A1- 2020 242 745

## Description

This application claims priority to Chinese Patent Application No. 202111449229.X, filed with the China National Intellectual Property Administration on November 27, 2021 and entitled "PICTURE PROCESSING METHOD AND APPARATUS",

### TECHNICAL FIELD

This application relates to picture processing technologies, and in particular, to a picture processing method and an apparatus.

### BACKGROUND

When viewing an image or a video by using a terminal device (for example, a mobile phone, a tablet, or a large screen), a user sometimes manually zooms in a local region of the image or the video (for example, a subject or a region of interest (region of interest, ROI) in the image or the video) to view details about the local region. In a conventional technology, a conventional algorithm is used to zoom in the local region, for example, a picture zoom-in algorithm (Lanczos) or an edge-preserving zoom-in algorithm.

However, the foregoing algorithm is usually implemented according to a principle of a low-pass filter, and consequently a zoomed-in picture is unclear and blurred.

US2020242745A1 discloses correcting the brightness of a zoomed-in image region to preserve consistent perceived brightness.

### SUMMARY

This application provides a picture processing method and an apparatus. A picture presented by processing a picture presented by a zoomed-in region is used to simulate visual sensory experience for a real scene that is of a to-be-zoomed-in region and that is perceived by human eyes, and is like a picture seen when a person really walks into a real scene corresponding to the to-be-zoomed-in region. This resolves a problem that a zoomed-in picture is unclear and blurred, and can improve visual zoom-in experience of a user.

According to a first aspect, this application provides a picture processing method. At an encoder side, the method includes: The encoder side obtains a to-be-processed picture, obtains a plurality of groups of visual sensory experience parameters, and encodes the to-be-processed picture and the plurality of groups of visual sensory experience parameters.

At a decoder side, the method includes: The decoder side obtains a to-be-processed picture; obtains a zoom-in operation instruction, where the zoom-in operation instruction indicates a to-be-zoomed-in region of the to-be-processed picture; obtains one or more groups of visual sensory experience parameters corresponding to one or more local pictures; and separately processes the corresponding local picture based on the one or more groups of visual sensory experience parameters to obtain a processed local picture.

In this embodiment of this application, after capturing the to-be-processed picture, the encoder side obtains the plurality of groups of visual sensory experience parameters for the to-be-processed picture, and the encoder side encodes and sends the to-be-processed picture and the plurality of groups of visual sensory experience parameters to the decoder side. In this way, after determining the to-be-zoomed-in region based on a user operation, the decoder side may perform local picture processing based on the visual sensory experience parameter corresponding to the to-be-zoomed-in region, to obtain the processed local picture. A picture presented by the processed local picture is used to simulate visual sensory experience for a real scene that is of the to-be-zoomed-in region and that is perceived by human eyes, and is like a picture seen when a person really walks into the real scene corresponding to the to-be-zoomed-in region. This resolves a problem that a zoomed-in picture is unclear and blurred, and can improve visual zoom-in experience of the user.

That the decoder side performs local picture processing based on the visual sensory experience parameter corresponding to the to-be-zoomed-in region may include: constructing three adaptive fields: a brightness perception model (brightness perception model), a contrast perception model (contrast perception model), and a color perception model (color perception model). The brightness perception model is used to ensure that brightness perceived under various display capabilities is consistent with that perceived by the human eyes in a real scene; the contrast perception model is used to ensure that quantities of just noticeable differences (just noticeable differences, JNDs) under various display capabilities are consistent with that perceived by the human eyes in the real scene; and the color perception model is used to ensure that colors under various display capabilities are consistent with that perceived by the human eyes in the real scene. The adaptive field can resolve problems of mapping from a natural scene to an optimal display D 1, mapping from the optimal display D1 to various displays D2, and mapping from various displays D2 to various viewing environments. It should be noted that the foregoing process merely describes an example of a method for determining the visual sensory experience parameter. In this embodiment of this application, the visual sensory experience parameter may alternatively be determined in another manner. This is not specifically limited herein.

The to-be-processed picture may also be referred to as a global picture. Usually, a photographing apparatus may capture, toward a target region, a picture including the target region, and the complete picture is the global picture. The encoder side splits the to-be-processed picture to obtain a plurality of candidate local pictures. Because the candidate local picture is obtained by splitting the to-be-processed picture, each candidate local picture corresponds to a local region of the to-be-processed picture. For example, quadtree partitioning is performed on the to-be-processed picture, and a candidate local picture in an upper left corner corresponds to a quarter local region located in an upper left corner of the to-be-processed picture.

The visual sensory experience parameter may include four types of parameters: luminance, contrast, a color, and details. A pixel feature of the candidate local picture is analyzed, and a picture presented after processing is used to simulate (approximate or enhance) the visual sensory experience for the real scene that is of the to-be-zoomed-in region and that is perceived by the human eyes, so that the visual sensory experience parameter corresponding to the candidate local picture can be determined. It can be learned that, in this embodiment of this application, there is a correspondence between the visual sensory experience parameter and the candidate local picture, and a group of visual sensory experience parameters may be determined for any candidate local picture based on a pixel feature of the candidate local picture, to adjust at least one of luminance, contrast, a color, and details of the candidate local picture.

For example, for a candidate local picture in a dark region of the picture, luminance and contrast may be improved, a color is adapted to a local dark region, and underexposure details are increased. In this way, it may be determined that a visual sensory experience parameter of the candidate local picture includes four types of parameters: luminance, contrast, a color, and details, and a specific value of the parameter corresponds to the foregoing adjustment requirement. For another example, for a candidate local picture in a bright region of the picture, luminance and contrast may be reduced, a color is adapted to a local bright region, and overexposure details are increased. In this way, it may be determined that a visual sensory experience parameter of the candidate local picture includes four types of parameters: luminance, contrast, a color, and details, and a specific value of the parameter corresponds to the foregoing adjustment requirement. For another example, for a candidate local picture in a picture subject region, luminance and contrast may be fine-tuned, and a color is adapted to a picture subject. In this way, it may be determined that a visual sensory experience parameter of the candidate local picture includes three types of parameters: luminance, contrast, and a color, and a specific value of the parameter corresponds to the foregoing adjustment requirement.

After obtaining the plurality of groups of visual sensory experience parameters, the encoder side may encode the to-be-processed picture and the plurality of groups of visual sensory experience parameters. For an encoding scheme of the to-be-processed picture, refer to a joint photographic experts group (joint photographic experts group, JPEG) coding standard, a hybrid video coding standard, or a scalable video encoding standard. An end-to-end encoding scheme may alternatively be used. Details are not described herein. The plurality of groups of visual sensory experience parameters may be encoded as metadata (metadata), and refer to the CUVA1.0 standard. In addition, the encoder side may further write, into a bitstream, a split manner of the to-be-processed picture and a correspondence between the candidate local picture and the visual sensory experience parameter, so that the decoder side may obtain, by parsing the bitstream, a plurality of candidate local pictures and a plurality of groups of visual sensory experience parameters corresponding to the plurality of candidate local pictures. For a manner of writing the foregoing information into the bitstream, refer to the conventional technology, provided that the decoder side can learn of the split manner of the to-be-processed picture and the correspondence between the candidate local pictures and the plurality of groups of visual sensory experience parameters. This is not specifically limited in embodiments of this application.

The decoder side decodes the bitstream in a decoding manner corresponding to the encoder side to obtain the to-be-processed picture.

The zoom-in operation instruction is generated through an operation performed on the to-be-processed picture. For example, the user views a picture on a mobile phone. When the user wants to zoom in a local region of the picture to view a detail, the user may use a thumb and an index finger to make a two-finger zoom-in gesture at a position at which the local region is displayed on a screen of the mobile phone, to display the picture in the local region on the screen of the mobile phone. The gesture may generate the foregoing zoom-in operation instruction. For another example, the user projects a video on a mobile phone to a large screen for playing. When the user wants to zoom in a video in a local region for playing, the user may use a thumb and an index finger to make a two-finger zoom-in gesture at a position at which the local region is displayed on a screen of the mobile phone, to display the video in the local region on the large screen. The gesture may generate the foregoing zoom-in operation instruction. It should be noted that the zoom-in operation instruction may alternatively be generated in another manner. This is not specifically limited in embodiments of this application.

The decoder side may obtain, based on information carried in the bitstream, the split manner of the to-be-processed picture and the correspondence between the plurality of candidate local pictures obtained through splitting and the plurality of groups of visual sensory experience parameters. In view of this, the decoder side may first split the to-be-processed picture in the foregoing split manner to obtain the plurality of candidate local pictures; then obtain the one or more local pictures corresponding to the to-be-zoomed-in region from the plurality of candidate local pictures; obtain the one or more groups of visual sensory experience parameters through decoding, where the one or more groups of visual sensory experience parameters correspond to the one or more local pictures; and finally process the corresponding local picture based on the one or more groups of visual sensory experience parameters to obtain the processed local picture.

The decoder side separately processes the corresponding local picture based on the obtained one or more groups of visual sensory experience parameters to obtain the processed local picture. A picture that can be presented by the processed local picture is used to simulate the visual sensory experience for the real scene that is of the to-be-zoomed-in region and that is perceived by human eyes.

Processing that may be performed on the corresponding local picture by the decoder side based on parameter content included in one group of visual sensory experience parameters includes at least one of the following:
when the visual sensory experience parameter includes a luminance parameter, performing luminance adjustment on the corresponding local picture;
when the visual sensory experience parameter includes a contrast parameter, performing contrast adjustment on the corresponding local picture;
when the visual sensory experience parameter includes a color parameter, performing color adjustment on the corresponding local picture; or
when the visual sensory experience parameter includes a detail parameter, performing detail adjustment on the corresponding local picture.

For example, for a local picture in a dark region of the picture, luminance and contrast may be improved, a color is adapted to a local dark region, and underexposure details are increased. In this way, it may be determined that a visual sensory experience parameter of the local picture includes four types of parameters: luminance, contrast, a color, and details, and a specific value of the parameter corresponds to the foregoing adjustment requirement. For another example, for a local picture in a bright region of the picture, luminance and contrast may be reduced, a color is adapted to a local bright region, and overexposure details are increased. In this way, it may be determined that a visual sensory experience parameter of the local picture includes four types of parameters: luminance, contrast, a color, and details, and a specific value of the parameter corresponds to the foregoing adjustment requirement. For another example, for a local picture in a picture subject region, luminance and contrast may be fine-tuned, and a color is adapted to a picture subject. In this way, it may be determined that a visual sensory experience parameter of the local picture includes three types of parameters: luminance, contrast, and a color, and a specific value of the parameter corresponds to the foregoing adjustment requirement.

In a possible implementation, the decoder side may implement detail adjustment on the one or more local pictures by using the following methods:
(1) A plurality of reference pictures are obtained, where the plurality of reference pictures and the to-be-processed picture are obtained by shooting a same scene by a plurality of cameras, and detail adjustment is performed on the corresponding local picture based on the plurality of reference pictures.
(2) A plurality of historical pictures whose similarities to the to-be-processed picture exceed a preset threshold are obtained, and detail adjustment is performed on the corresponding local picture based on the plurality of historical pictures.

In a possible implementation, the decoder side may store the processed local picture locally, so that when the user subsequently zooms in the same region again, the processed local picture is extracted from the memory and directly displayed.

In a possible implementation, the decoder side may transmit the processed local picture to a display apparatus (for example, a display) for displaying.

According to a second aspect, an embodiment of this application provides a picture processing method. At an encoder side, the method includes: The encoder side obtains a to-be-processed picture, splits the to-be-processed picture to obtain a plurality of candidate local pictures, obtains a plurality of groups of visual sensory experience parameters, separately processes the corresponding candidate local picture based on the plurality of groups of visual sensory experience parameters to obtain a plurality of processed candidate local pictures, and encodes the to-be-processed picture and the plurality of processed candidate local pictures.

At a decoder side, the method includes: The decoder side obtains a to-be-processed picture and the plurality of processed candidate local pictures; obtains a zoom-in operation instruction, where the zoom-in operation instruction indicates a to-be-zoomed-in region of the to-be-processed picture; and obtains a processed local picture based on the to-be-zoomed-in region.

In this embodiment of this application, after capturing the to-be-processed picture, the encoder side obtains respective visual sensory experience parameters for the plurality of candidate local pictures in the to-be-processed picture, and then separately processes corresponding candidate local pictures based on the plurality of groups of visual sensory experience parameters to obtain the plurality of processed candidate local pictures. The encoder side encodes and sends the to-be-processed picture and the plurality of processed candidate local pictures to the decoder side. In this way, after determining the to-be-zoomed-in region based on a user operation, the decoder side directly performs decoding to obtain the processed local picture. A picture presented by the processed local picture is used to simulate (approximate or enhance) visual sensory experience for a real scene that is of the to-be-zoomed-in region and that is perceived by human eyes, and is like a picture seen when a person really walks into the real scene corresponding to the to-be-zoomed-in region. This resolves a problem that a zoomed-in picture is unclear and blurred, and can improve visual zoom-in experience of a user.

A difference from the embodiment of the first aspect lies in that, when obtaining the plurality of groups of visual sensory experience parameters, the encoder side separately processes the plurality of candidate local pictures to obtain the plurality of processed candidate local pictures. The plurality of groups of visual sensory experience parameters do not need to be transmitted to the decoder side, and the decoder side does not need to perform picture processing.

In a possible implementation, before encoding the plurality of processed candidate local pictures, the encoder side may perform TM on each local region of the to-be-processed picture, to improve a similarity between the local region of the to-be-processed picture and the processed local picture corresponding to the local region, and reduce an amount of residual data of the candidate local picture.

The decoder side may obtain the plurality of candidate local pictures through decoding, obtain one or more local pictures corresponding to the to-be-zoomed-in region, and obtain the processed local picture based on the one or more local pictures.

A difference from the embodiment of the first aspect lies in that, because the candidate local pictures obtained through decoding of the decoder side are pictures processed by the encoder side, after obtaining the to-be-zoomed-in region, the decoder side determines, from the plurality of candidate local pictures, the one or more local pictures corresponding to the to-be-zoomed-in region, and the one or more local pictures directly form the processed local picture.

According to a third aspect, an embodiment of this application provides a picture processing method. At an encoder side, the method includes: The encoder side obtains a to-be-processed picture, and encodes the to-be-processed picture.

At a decoder side, the method includes: The decoder side obtains a to-be-processed picture; obtains a zoom-in operation instruction, where the zoom-in operation instruction indicates a to-be-zoomed-in region of the to-be-processed picture; obtains, according to a preset rule, a visual sensory experience parameter corresponding to the to-be-zoomed-in region; and processes the to-be-zoomed-in region based on the visual sensory experience parameter to obtain a processed local picture.

In this embodiment of this application, after capturing the to-be-processed picture, the encoder side directly encodes the to-be-processed picture, and does not need to obtain a plurality of candidate local pictures of the to-be-processed picture and respective visual sensory experience parameters. This can reduce occupation of a bitstream. After determining the to-be-zoomed-in region based on a user operation, the decoder side may obtain one or more corresponding local pictures based on the to-be-zoomed-in region, obtain one or more groups of visual sensory experience parameters according to the preset rule, and then process the local picture based on these parameters to obtain the processed local picture. A picture presented by the processed local picture is used to simulate (approximate or enhance) visual sensory experience for a real scene that is of the to-be-zoomed-in region and that is perceived by human eyes, and is like a picture seen when a person really walks into the real scene corresponding to the to-be-zoomed-in region. This resolves a problem that a zoomed-in picture is unclear and blurred, and can improve visual zoom-in experience of a user.

In this embodiment of this application, the encoder side carries only the to-be-processed picture (namely, a global picture) in the bitstream, does not carry a plurality of candidate local pictures or a plurality of groups of visual sensory experience parameters, and does not partition the to-be-processed picture or perform a picture processing operation. Therefore, after parsing the bitstream, the decoder side can obtain only a global reconstructed picture. Therefore, if the decoder side is to process the to-be-zoomed-in region, the decoder side needs to obtain, based on historical data or experience information, the visual sensory experience parameter corresponding to the to-be-zoomed-in region.

The decoder side may first split the to-be-processed picture according to a first preset rule to obtain a plurality of candidate local pictures; obtain one or more local pictures corresponding to the to-be-zoomed-in region, where the plurality of candidate local pictures include the one or more local pictures; and then obtain, according to a second preset rule, one or more groups of visual sensory experience parameters corresponding to the one or more local pictures. The preset rule includes the first preset rule and the second preset rule.

The decoder side may first split the reconstructed global picture based on the description about the split manner in the embodiment of the first aspect, to obtain the plurality of candidate local pictures, and then determine the candidate local picture included in the to-be-zoomed-in region based on a position of the to-be-zoomed-in region, where the candidate local picture is a local picture corresponding to the to-be-zoomed-in region.

In addition, with reference to the embodiment in the first aspect or the second aspect, in this embodiment of this application, the encoder side may first process the plurality of candidate local pictures, then write the to-be-processed picture, the plurality of processed candidate local pictures, and the plurality of groups of visual sensory experience parameters into a bitstream, and transmit the bitstream to the decoder side. In this case, the visual sensory experience parameters may be divided into two parts. One part is used by the encoder side to process the plurality of candidate local pictures. In this way, the plurality of processed candidate local pictures have been adjusted from at least one of luminance, contrast, a color, and details, and good effect is obtained. The other part is written into the bitstream and transmitted to the decoder side for use, and is also used to process the plurality of candidate local pictures. In this way, after processing by the decoder side, the processed local picture can better meet a requirement of a display end, and achieve best display effect. Correspondingly, the visual sensory experience parameter transmitted to the decoder side may include luminance, contrast, and the like. The decoder side parses the bitstream, reconstructs the to-be-processed picture, the plurality of processed candidate local pictures, and the plurality of groups of visual sensory experience parameters, and processes the plurality of processed candidate local pictures again based on the plurality of groups of visual sensory experience parameters, to obtain the final processed local picture.

According to a fourth aspect, an embodiment of this application provides a decoding apparatus, including an obtaining module and a processing module.

Optionally, the obtaining module is configured to: obtain a to-be-processed picture; obtain a zoom-in operation instruction, where the zoom-in operation instruction indicates a to-be-zoomed-in region of the to-be-processed picture, and the to-be-zoomed-in region corresponds to one or more local pictures; and obtain one or more groups of visual sensory experience parameters corresponding to the one or more local pictures. The processing module is configured to separately process the corresponding local picture based on the one or more groups of visual sensory experience parameters to obtain a processed local picture.

In a possible implementation, the visual sensory experience parameter includes at least one of a luminance parameter, a contrast parameter, a color parameter, and a detail parameter. The processing module is specifically configured to perform at least one of the following operations: when the visual sensory experience parameter includes a luminance parameter, performing luminance adjustment on the corresponding local picture; when the visual sensory experience parameter includes a contrast parameter, performing contrast adjustment on the corresponding local picture; when the visual sensory experience parameter includes a color parameter, performing color adjustment on the corresponding local picture; or when the visual sensory experience parameter includes a detail parameter, performing detail adjustment on the corresponding local picture. The corresponding local picture is one of the one or more local pictures.

In a possible implementation, the processing module is specifically configured to: when the corresponding local picture corresponds to a dark region of a picture, perform at least one of luminance improvement, contrast improvement, color adaptation for the dark region, and underexposure detail increase on the corresponding local picture; when the corresponding local picture corresponds to a bright region of a picture, perform at least one of luminance reduction, contrast reduction, color adaptation for the bright region, and overexposure detail increase on the corresponding local picture; or when the corresponding local picture corresponds to a picture subject region, perform color adaptation for a subject on the corresponding local picture. The corresponding local picture is one of the one or more local pictures.

In a possible implementation, the processing module is specifically configured to: obtain a plurality of reference pictures, where the plurality of reference pictures and the to-be-processed picture are obtained by shooting a same scene by a plurality of cameras; and perform detail adjustment on the corresponding local picture based on the plurality of reference pictures.

In a possible implementation, the processing module is specifically configured to: obtain a plurality of historical pictures whose similarities to the to-be-processed picture exceed a preset threshold, and perform detail adjustment on the corresponding local picture based on the plurality of historical pictures.

In a possible implementation, a picture presented by the processed local picture is used to simulate visual sensory experience for a real scene that is of the to-be-zoomed-in region and that is perceived by human eyes.

In a possible implementation, the zoom-in operation instruction is generated through an outward sliding operation of two fingers of a user on the to-be-zoomed-in region; or the zoom-in operation instruction is generated through a tapping operation of two fingers of a user on the to-be-zoomed-in region.

In a possible implementation, the obtaining module is specifically configured to decode an obtained bitstream to obtain the one or more groups of visual sensory experience parameters.

In a possible implementation, the obtaining module is specifically configured to: perform scalable video decoding on the obtained bitstream to obtain the to-be-processed picture, or perform picture decompression on an obtained picture file to obtain the to-be-processed picture.

In a possible implementation, the processing module is further configured to: display the processed local picture, or store the processed local picture.

In a possible implementation, the obtaining module is further configured to: obtain a zoom-in termination instruction, where the zoom-in termination instruction is generated through an inward sliding operation of two fingers of the user on the processed local picture, or the zoom-in termination instruction is generated through a tapping operation of a single finger of the user on the processed local picture. The processing module is further configured to display the to-be-processed picture based on the zoom-in termination instruction.

Optionally, the obtaining module is configured to: obtain a to-be-processed picture; obtain a zoom-in operation instruction, where the zoom-in operation instruction indicates a to-be-zoomed-in region of the to-be-processed picture; and obtain, according to a preset rule, a visual sensory experience parameter corresponding to the to-be-zoomed-in region. The processing module is configured to process the to-be-zoomed-in region based on the visual sensory experience parameter to obtain a processed local picture.

In a possible implementation, the visual sensory experience parameter includes at least one of a luminance parameter, a contrast parameter, a color parameter, and a detail parameter. The processing module is specifically configured to perform at least one of the following operations: when the visual sensory experience parameter includes a luminance parameter, performing luminance adjustment on the corresponding local picture; when the visual sensory experience parameter includes a contrast parameter, performing contrast adjustment on the corresponding local picture; when the visual sensory experience parameter includes a color parameter, performing color adjustment on the corresponding local picture; or when the visual sensory experience parameter includes a detail parameter, performing detail adjustment on the corresponding local picture. The corresponding local picture is one of the one or more local pictures.

In a possible implementation, the processing module is specifically configured to: when the corresponding local picture corresponds to a dark region of a picture, perform at least one of luminance improvement, contrast improvement, color adaptation for the dark region, and underexposure detail increase on the corresponding local picture; when the corresponding local picture corresponds to a bright region of a picture, perform at least one of luminance reduction, contrast reduction, color adaptation for the bright region, and overexposure detail increase on the corresponding local picture; or when the corresponding local picture corresponds to a picture subject region, perform color adaptation for a subject on the corresponding local picture. The corresponding local picture is one of the one or more local pictures.

In a possible implementation, the processing module is specifically configured to: obtain a plurality of reference pictures, where the plurality of reference pictures and the to-be-processed picture are obtained by shooting a same scene by a plurality of cameras; and perform detail adjustment on the corresponding local picture based on the plurality of reference pictures.

In a possible implementation, the processing module is specifically configured to: obtain a plurality of historical pictures whose similarities to the to-be-processed picture exceed a preset threshold, and perform detail adjustment on the corresponding local picture based on the plurality of historical pictures.

In a possible implementation, a picture presented by the processed local picture is used to simulate visual sensory experience for a real scene that is of the to-be-zoomed-in region and that is perceived by human eyes.

In a possible implementation, the zoom-in operation instruction is generated through an outward sliding operation of two fingers of a user on the to-be-zoomed-in region; or the zoom-in operation instruction is generated through a tapping operation of two fingers of a user on the to-be-zoomed-in region.

In a possible implementation, the obtaining module is specifically configured to: split the to-be-processed picture according to a first preset rule to obtain a plurality of candidate local pictures; obtain one or more local pictures corresponding to the to-be-zoomed-in region, where the plurality of candidate local pictures include the one or more local pictures; and obtain, according to a second preset rule, one or more groups of visual sensory experience parameters corresponding to the one or more local pictures. The preset rule includes the first preset rule and the second preset rule.

In a possible implementation, the obtaining module is specifically configured to: perform scalable video decoding on the obtained bitstream to obtain the to-be-processed picture, or perform picture decompression on an obtained picture file to obtain the to-be-processed picture.

In a possible implementation, the processing module is further configured to: display the processed local picture, or store the processed local picture.

In a possible implementation, the obtaining module is further configured to: obtain a zoom-in termination instruction, where the zoom-in termination instruction is generated through an inward sliding operation of two fingers of the user on the processed local picture, or the zoom-in termination instruction is generated through a tapping operation of a single finger of the user on the processed local picture. The processing module is further configured to display the to-be-processed picture based on the zoom-in termination instruction.

According to a fifth aspect, an embodiment of this application provides an encoding apparatus, including an obtaining module, an encoding module, and a processing module.

Optionally, the obtaining module is configured to: obtain a to-be-processed picture, and obtain a plurality of groups of visual sensory experience parameters. The encoding module is configured to encode the to-be-processed picture and the plurality of groups of visual sensory experience parameters.

Optionally, the obtaining module is configured to: obtain a to-be-processed picture; split the to-be-processed picture to obtain a plurality of candidate local pictures; and obtain a plurality of groups of visual sensory experience parameters, where the plurality of groups of visual sensory experience parameters correspond to the plurality of candidate local pictures. The processing module is configured to separately process the corresponding candidate local picture based on the plurality of groups of visual sensory experience parameters to obtain a plurality of processed candidate local pictures. The encoding module is configured to encode the to-be-processed picture and the plurality of processed candidate local pictures.

In a possible implementation, the visual sensory experience parameter includes at least one of a luminance parameter, a contrast parameter, a color parameter, and a detail parameter. The processing module is specifically configured to perform at least one of the following operations: when the visual sensory experience parameter includes a luminance parameter, performing luminance adjustment on the corresponding local picture; when the visual sensory experience parameter includes a contrast parameter, performing contrast adjustment on the corresponding local picture; when the visual sensory experience parameter includes a color parameter, performing color adjustment on the corresponding local picture; or when the visual sensory experience parameter includes a detail parameter, performing detail adjustment on the corresponding local picture. The corresponding local picture is one of the plurality of candidate local pictures.

In a possible implementation, the processing module is specifically configured to: when the corresponding local picture corresponds to a dark region of a picture, perform at least one of luminance improvement, contrast improvement, color adaptation for the dark region, and underexposure detail increase on the corresponding local picture; when the corresponding local picture corresponds to a bright region of a picture, perform at least one of luminance reduction, contrast reduction, color adaptation for the bright region, and overexposure detail increase on the corresponding local picture; or when the corresponding local picture corresponds to a picture subject region, perform color adaptation for a subject on the corresponding local picture. The corresponding local picture is one of the plurality of candidate local pictures.

In a possible implementation, the processing module is specifically configured to: obtain a plurality of reference pictures, where the plurality of reference pictures and the to-be-processed picture are obtained by shooting a same scene by a plurality of cameras; and perform detail adjustment on the corresponding local picture based on the plurality of reference pictures.

In a possible implementation, the processing module is specifically configured to: obtain a plurality of historical pictures whose similarities to the to-be-processed picture exceed a preset threshold, and perform detail adjustment on the corresponding local picture based on the plurality of historical pictures.

In a possible implementation, the obtaining module is specifically configured to obtain the plurality of groups of visual sensory experience parameters according to a third preset rule.

In a possible implementation, the encoding module is specifically configured to: perform scalable video encoding on the to-be-processed picture and the plurality of processed candidate local pictures to obtain a bitstream, or perform picture compression on the to-be-processed picture and the plurality of processed candidate local pictures to obtain a picture file.

According to a sixth aspect, this application provides an encoder, including one or more processors, and a non-transitory computer-readable storage medium coupled to the processor and storing a program executed by the processor, where when the program is executed by the processor, the encoder is enabled to perform the method performed at an encoder side in any one of the first aspect to the third aspect.

According to a seventh aspect, this application provides a decoder, including one or more processors, and a non-transitory computer-readable storage medium coupled to the processor and storing a program executed by the processor, where when the program is executed by the processor, the decoder is enabled to perform the method performed at a decoder side in any one of the first aspect to the third aspect.

According to an eighth aspect, this application provides a non-transitory computer-readable storage medium, including program code, where when the program code is executed by a computer device, the method in any one of the first aspect to the third aspect is performed.

According to a ninth aspect, this application provides a non-transitory storage medium, including a bitstream in the method in any one of the first aspect to the third aspect.

According to a tenth aspect, this application provides a computer program product including instructions, where when the computer program product runs on a computer, the computer is enabled to perform the method in any one of the first aspect to the third aspect.

### BRIEF DESCRIPTION OF DRAWINGS

FIG. 1A is an example block diagram of a coding system 10 according to an embodiment of this application;
FIG. 1B is an example block diagram of a video coding system 40 according to an embodiment of this application;
FIG. 2 is an example block diagram of a video encoder 20 according to an embodiment of this application;
FIG. 3 is an example block diagram of a video decoder 30 according to an embodiment of this application;
FIG. 4 is an example block diagram of a video coding device 400 according to an embodiment of this application;
FIG. 5 is a schematic diagram of example layers of scalable video encoding according to this application;
FIG. 6 is an example flowchart of an enhancement layer encoding method according to this application;
FIG. 7 is an example flowchart of a picture processing method according to this application;
FIG. 8 is a schematic diagram of a pyramid partitioning manner;
FIG. 9 is a schematic diagram of determining a visual sensory experience parameter;
FIG. 10 is an example diagram of a picture encoding procedure;
FIG. 11 is an example diagram of a picture decoding procedure;
FIG. 12a is an example diagram of processing effect on a local picture;
FIG. 12b is an example diagram of processing effect on a local picture;
FIG. 13 is an example flowchart of a picture processing method according to this application;
FIG. 14 is an example flowchart of a picture processing method according to this application;
FIG. 15 is a schematic diagram of an example structure of a decoding apparatus 1500 according to an embodiment of this application; and
FIG. 16 is a schematic diagram of an example structure of an encoding apparatus 1600 according to an embodiment of this application.

### DESCRIPTION OF EMBODIMENTS

To make objectives, technical solutions, and advantages of this application clearer, the following clearly and completely describes technical solutions in this application with reference to accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, terms "first", "second", and the like are merely intended for distinguishing and description, and shall not be understood as an indication or implication of relative importance or an indication or implication of an order. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

It should be understood that in this application, "at least one piece (item)" means one or more and "a plurality of" means two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate a, b, c, "a and b", "a and c", "b and c", or "a, b, and c", where a, b, and c may be singular or plural.

Video coding usually indicates processing of a sequence of pictures that form a video or a video sequence. In the field of video coding, the terms "picture (picture)", "frame (frame)", and "image (image)" may be used as synonyms. Video coding (or coding in general) includes two parts video encoding and video decoding. Video encoding is performed at a source side, typically including processing (for example, compressing) original video pictures to reduce an amount of data required for representing the video pictures (for more efficient storage and/or transmission). Video decoding is performed at a destination side, and typically includes inverse processing in comparison with processing of an encoder to reconstruct the video pictures. Embodiments referring to "coding" of video pictures (or pictures in general) shall be understood to relate to "encoding" or "decoding" of video pictures or respective video sequences. A combination of an encoding part and a decoding part is also referred to as encoding and decoding (encoding and decoding, CODEC).

In a case of lossless video coding, the original video pictures can be reconstructed. In other words, the reconstructed video pictures have same quality as the original video pictures (assuming no transmission loss or other data loss during storage or transmission). In a case of lossy video coding, further compression is performed through, for example, quantization, to reduce an amount of data required for representing the video pictures, which cannot be totally reconstructed at a decoder side. In other words, quality of the reconstructed video pictures is lower or worse compared to the quality of the original video pictures.

Several video coding standards are used for "lossy hybrid video coding" (that is, spatial and temporal prediction in a pixel domain is combined with 2D transform coding for applying quantization in a transform domain). Each picture of a video sequence is usually partitioned into a set of non-overlapping blocks, and coding is usually performed at a block level. In other words, at the encoder, a video is usually processed, that is, encoded, at a block (video block) level. For example, a prediction block is generated through spatial (intra picture) prediction and temporal (inter picture) prediction, the prediction block is subtracted from a current block (block being processed or to be processed) to obtain a residual block, and the residual block is transformed in the transform domain and quantized to reduce an amount of data that is to be transmitted (compressed). At the decoder side, inverse processing compared to the encoder is applied to an encoded block or a compressed block to reconstruct the current block for representation. Furthermore, the encoder duplicates the decoder processing step, so that the encoder and the decoder generate same prediction (for example, intra prediction and inter prediction) and/or pixel reconstruction, for processing, that is, coding subsequent blocks.

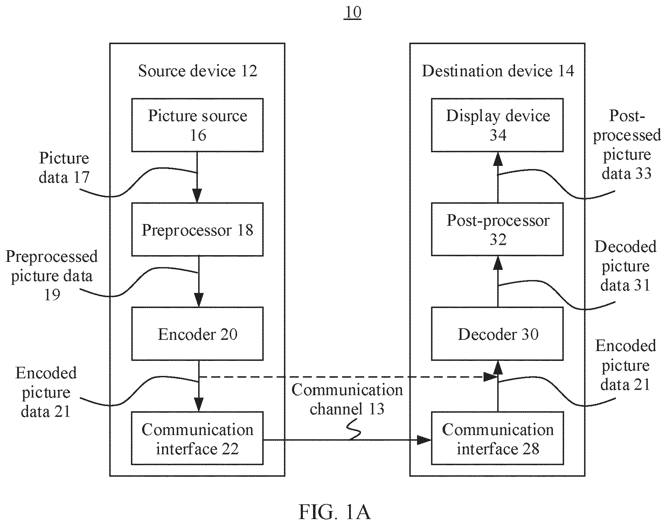

In the following embodiments of a coding system 10, an encoder 20 and a decoder 30 are described based on FIG. 1A to FIG. 3.

FIG. 1A is an example block diagram of the coding system 10 according to an embodiment of this application, for example, a video coding system 10 (or the coding system 10 for short) that may utilize techniques of this application. A video encoder 20 (or the encoder 20 for short) and a video decoder 30 (or the decoder 30 for short) of the video coding system 10 represent devices that may be configured to perform techniques in accordance with various examples described in this application.

As shown in FIG. 1A, the coding system 10 includes a source device 12 configured to provide encoded picture data 21 such as encoded pictures, to a destination device 14 for decoding the encoded picture data 21.

The source device 12 includes the encoder 20, and may additionally, that is, optionally, include a picture source 16, a preprocessor (or preprocessing unit) 18, for example, a picture preprocessor, and a communication interface (or communication unit) 22.

The picture source 16 may include or be any type of picture capturing device, for example a camera for capturing a real-world picture, and/or any type of a picture generating device, for example a computer-graphics processor for generating a computer animated picture, or any type of other device for obtaining and/or providing a real-world picture, a computer generated picture (for example, a screen content, a virtual reality (VR) picture) and/or any combination thereof (for example, an augmented reality (AR) picture). The picture source may be any type of memory or storage storing any of the aforementioned pictures.

In order to distinguish processing performed by the preprocessor (or preprocessing unit) 18, a picture (or picture data) 17 may also be referred to as an original picture (or original picture data) 17.

The preprocessor 18 is configured to receive the original picture data 17, and preprocess the original picture data 17, to obtain a preprocessed picture (or preprocessed picture data) 19. Preprocessing performed by the preprocessor 18 may, for example, include trimming, color format conversion (for example, from RGB to YCbCr), color correction, or de-noising. It may be understood that the pre-processing unit 18 may be optional component.

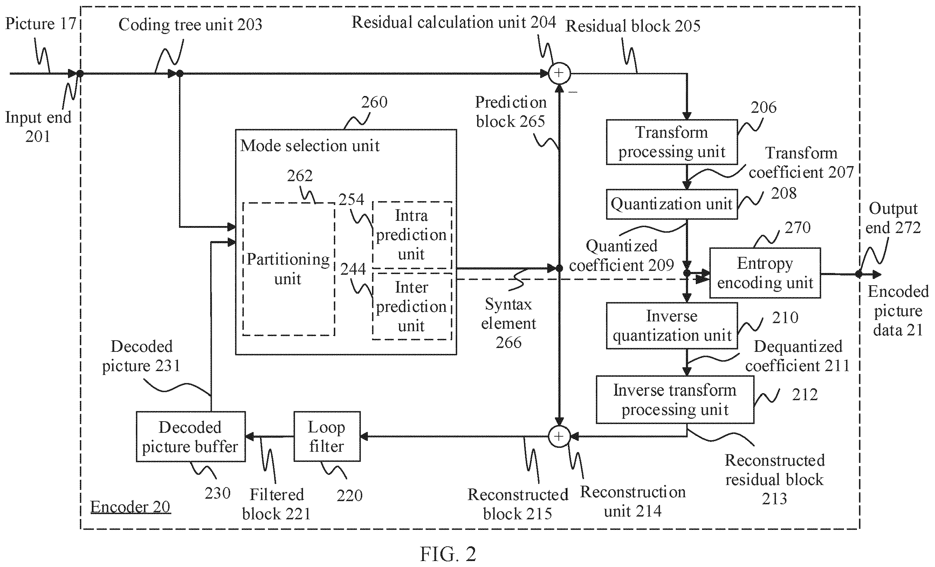

The video encoder (or encoder) 20 is configured to receive the preprocessed picture data 19 and provide the encoded picture data 21 (further details are described below, for example, based on FIG. 2).

A communication interface 22 of the source device 12 may be configured to receive the encoded picture data 21 and send the encoded picture data 21 (or any further processed version thereof) over a communication channel 13 to another device, for example, the destination device 14 or any other device, for storage or direct reconstruction.

The destination device 14 includes the decoder 30, and may additionally, that is, optionally, include a communication interface (or communication unit) 28, a post-processor (or post-processing unit) 32 and a display device 34.

The communication interface 28 of the destination device 14 is configured to directly receive the encoded picture data 21 (or any further processed version thereof) from the source device 12 or any other source device such as a storage device, and provide the encoded picture data 21 to the decoder 30. For example, the storage device is an encoded picture data storage device.

The communication interface 22 and the communication interface 28 may be configured to transmit or receive the encoded picture data (or encoded data) 21 via a direct communication link between the source device 12 and the destination device 14, for example, a direct wired or wireless connection, or via any type of network, for example, a wired or wireless network or any combination thereof, or any type of private and public network, or any type of combination thereof.

The communication interface 22 may be, for example, configured to package the encoded picture data 21 into an appropriate format, for example, packets, and/or process the encoded picture data using any type of transmission encoding or processing for transmission via a communication link or communication network.

The communication interface 28, corresponding to the communication interface 22, may be, for example, configured to receive the transmitted data and process the transmitted data using any type of corresponding transmission decoding or processing and/or de-packaging to obtain the encoded picture data 21.

Both the communication interface 22 and the communication interface 28 may be configured as unidirectional communication interfaces as indicated by the arrow for the communication channel 13 in FIG. 1A pointing from the source device 12 to the destination device 14, or bi-directional communication interfaces, and may be configured, for example, to send and receive messages, for example, to set up a connection, to acknowledge and exchange any other information related to the communication link and/or data transmission, for example, encoded picture data transmission.

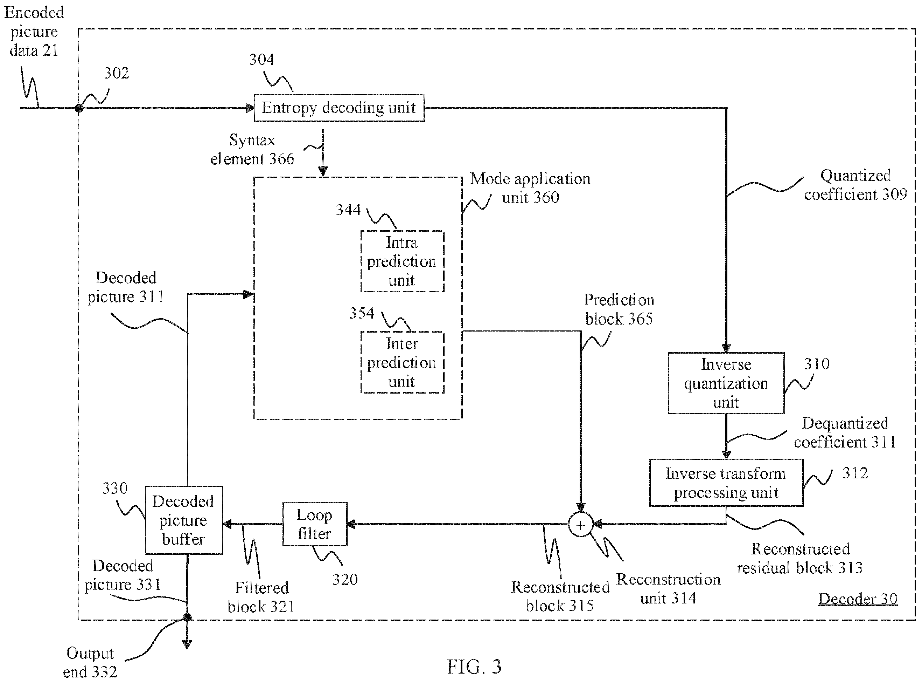

The video decoder (or decoder) 30 is configured to receive the encoded picture data 21 and provide decoded picture data (or decoded picture data) 31 (further details are described below, for example, based on FIG. 3).

The post-processor 32 is configured to post-process the decoded picture data 31 (also referred to as reconstructed picture data), for example, the decoded picture, to obtain post-processed picture data 33, for example, a post-processed picture. Post-processing performed by the post-processing unit 32 may include, for example, color format conversion (for example, from YCbCr to RGB), color correction, trimming, or re-sampling, or any other processing, for example, for preparing the decoded picture data 31 for display, for example, by the display device 34.

The display device 34 is configured to receive the post-processed picture data 33 for displaying the picture, for example, to a user or viewer. The display device 34 may be or include any type of display for representing the reconstructed picture, for example, an integrated or external display or monitor. For example, the display may include a liquid crystal display (liquid crystal display, LCD), an organic light emitting diode (organic light emitting diode, OLED) display, a plasma display, a projector, a micro LED display, liquid crystal on silicon (liquid crystal on silicon, LCoS), a digital light processor (digital light processor, DLP), or any type of other display.

Although FIG. 1A shows the source device 12 and the destination device 14 as separate devices, a device embodiment may alternatively include both the source device 12 and the destination device 14 or functions of both the source device 12 and the destination device 14, namely, the source device 12 or a corresponding function and the destination device 14 or a corresponding function. In these embodiments, the source device 12 or the corresponding function and the destination device 14 or the corresponding function may be implemented by using the same hardware and/or software or by separate hardware and/or software or any combination thereof.

As will be apparent for the skilled person based on the description, the existence and (exact) division into the different units or functions in the source device 12 and/or destination device 14 as shown in FIG. 1A may vary depending on an actual device and application.

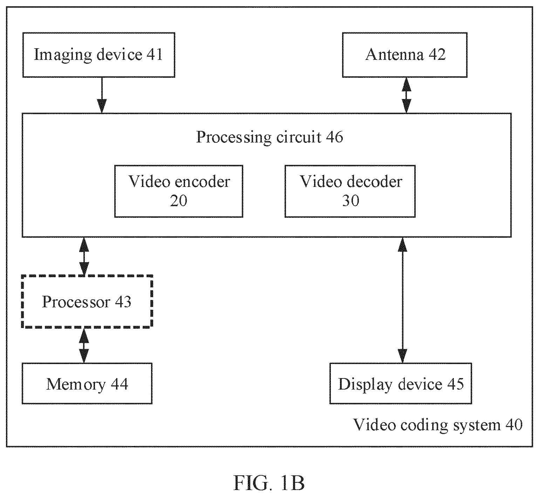

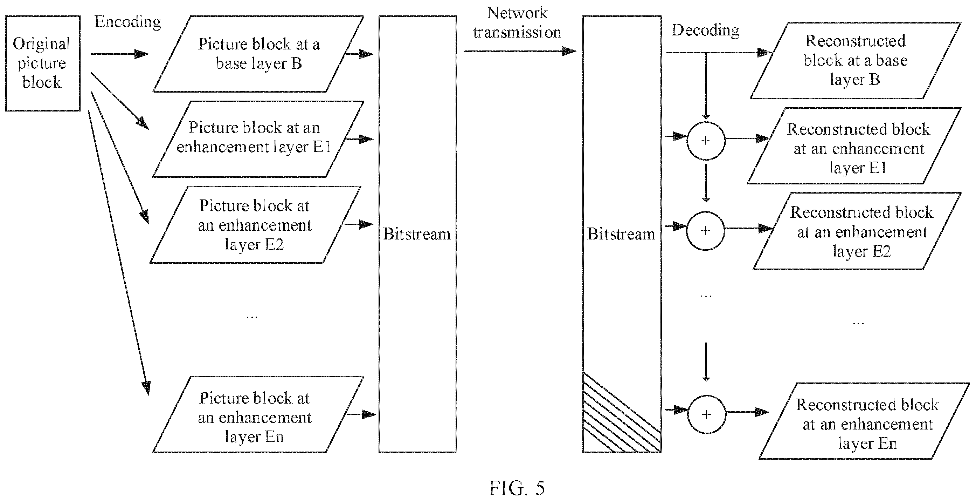

The encoder 20 (for example, the video encoder 20) or the decoder 30 (for example, the video decoder 30) or both the encoder 20 and the decoder 30 may be implemented via a processing circuit as shown in FIG. 1B, such as one or more microprocessors, digital signal processors (digital signal processors, DSPs), application-specific integrated circuits (application-specific integrated circuits, ASICs), field-programmable gate arrays (field-programmable gate arrays, FPGAs), discrete logic, hardware, video coding dedicated processors or any combinations thereof. The encoder 20 may be implemented by a processing circuit 46 to embody the various modules described with reference to the encoder 20 in FIG. 2 and/or any other encoder system or subsystem described in this specification. The decoder 30 may be implemented by the processing circuit 46 to embody the various modules described with reference to the decoder 30 in FIG. 3 and/or any other decoder system or subsystem described in this specification. The processing circuit 46 may be configured to perform the various operations described below. As shown in FIG. 5, if the techniques are implemented partially in software, a device may store instructions for the software in a suitable computer-readable storage medium and may execute the instructions in hardware using one or more processors to perform the techniques of the present invention. Either of the video encoder 20 and the video decoder 30 may be integrated as part of a combined encoder/decoder (encoder/decoder, CODEC) in a single device, for example, as shown in FIG. 1B.

The source device 12 and the destination device 14 may include any of a wide range of devices, including any type of handheld or stationary devices, for example, notebook or laptop computers, mobile phones, smart phones, tablets or tablet computers, cameras, desktop computers, set-top boxes, televisions, display devices, digital media players, video gaming consoles, video streaming devices (such as content service servers or content delivery servers), broadcast receiver device, broadcast transmitter device, or the like and may use no or any type of operating system. In some cases, the source device 12 and the destination device 14 may be equipped with components for wireless communication. Therefore, the source device 12 and the destination device 14 may be wireless communication devices.

In some cases, the video coding system 10 illustrated in FIG. 1A is merely an example and the techniques of this application are applicable to video coding settings (for example, video encoding or video decoding) that do not necessarily include any data communication between the encoding device and the decoding device. In other examples, data is retrieved from a local memory, streamed via a network, or the like. A video encoding device may encode data and store encoded data into the memory, and/or a video decoding device may retrieve data from the memory and decode the data. In some examples, encoding and decoding are performed by devices that do not communicate with one another, but simply encode data to the memory and/or retrieve and decode data from the memory.

FIG. 1B is the example block diagram of the video coding system 40 according to this embodiment of this application. As shown in FIG. 1B, the video coding system 40 may include an imaging device 41, the video encoder 20, and the video decoder 30 (and/or a video encoder/decoder implemented by the processing circuit 46), an antenna 42, one or more processors 43, one or more memories 44, and/or a display device 45.

As shown in FIG. 1B, the imaging device 41, the antenna 42, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 42 may be configured to transmit or receive an encoded bitstream of video data. Further, in some examples, the display device 45 may be configured to present the video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be any type of memory, for example, a volatile memory (for example, a static random-access memory (static random-access memory, SRAM) or a dynamic random-access memory (dynamic random-access memory, DRAM)) or a nonvolatile memory (for example, a flash memory). In a non-limitative example, the memory 44 may be implemented by a cache memory. In other examples, the processing circuit 46 may include a memory (for example, a cache) for implementing a picture buffer.

In some examples, the video encoder 20 implemented by the logic circuit may include a picture buffer (which is implemented by, for example, the processing circuit 46 or the memory 44) and a graphics processing unit (which is implemented by, for example, the processing circuit 46). The graphics processing unit may be communicatively coupled to the picture buffer. The graphics processing unit may be included in the video encoder 20 implemented by the processing circuit 46, to implement various modules described with reference to FIG. 2 and/or any other encoder system or subsystem described in this specification. The logic circuit may be configured to perform various operations described in this specification.

In some examples, the video decoder 30 may be implemented by the processing circuit 46 in a similar manner, to implement various modules described with reference to the video decoder 30 in FIG. 3 and/or any other decoder system or subsystem described in this specification. In some examples, the video decoder 30 implemented by the logic circuit may include a picture buffer (which is implemented by the processing circuit 46 or the memory 44) and a graphics processing unit (which is implemented by, for example, the processing circuit 46). The graphics processing unit may be communicatively coupled to the picture buffer. The graphics processing unit may be included in the video decoder 30 implemented by the processing circuit 46, to implement various modules described with reference to FIG. 3 and/or any other decoder system or subsystem described in this specification.

In some examples, the antenna 42 may be configured to receive an encoded bitstream of video data. As described, the encoded bitstream may include data, an indicator, an index value, mode selection data, or the like related to video frame encoding described in this specification, for example, data related to coding partitioning (for example, a transform coefficient or a quantized transform coefficient, an optional indicator (as described), and/or data defining the coding partitioning). The video coding system 40 may further include the video decoder 30 that is coupled to the antenna 42 and that is configured to decode the encoded bitstream. The display device 45 is configured to present a video frame.

It should be understood that in this embodiment of this application, for the example described with reference to the video encoder 20, the video decoder 30 may be configured to perform a reverse process. With regard to a signaling syntax element, the video decoder 30 may be configured to receive and parse such a syntax element and correspondingly decode related video data. In some examples, the video encoder 20 may entropy-encode the syntax element into an encoded video bitstream. In such examples, the video decoder 30 may parse such syntax element and correspondingly decode the related video data.

For ease of description, embodiments of the present invention are described by referring to versatile video coding (versatile video coding, VVC) reference software or high efficiency video coding (high efficiency video coding, HEVC) developed by the joint collaboration team on video coding (joint collaboration team on video coding, JCT-VC) of the ITU-T video coding experts group (video coding experts group, VCEG) and the ISO/IEC motion picture experts group (motion picture experts group, MPEG). A person of ordinary skill in the art understands that embodiments of the present invention are not limited to HEVC or VVC.

### Encoder and encoding method

FIG. 2 is an example block diagram of the video encoder 20 according to an embodiment of this application. As shown in FIG. 2, the video encoder 20 includes an input end (or input interface) 201, a residual calculation unit 204, a transform processing unit 206, a quantization unit 208, an inverse quantization unit 210, and inverse transform processing unit 212, a reconstruction unit 214, a loop filter 220, a decoded picture buffer (decoded picture buffer, DPB) 230, a mode selection unit 260, an entropy encoding unit 270 and an output end (or output interface) 272. The mode selection unit 260 may include an inter prediction unit 244, an intra prediction unit 254 and a partitioning unit 262. The inter prediction unit 244 may include a motion estimation unit and a motion compensation unit (not shown). The video encoder 20 shown in FIG. 2 may also be referred to as a hybrid video encoder or a video encoder based on a hybrid video codec.

The residual calculation unit 204, the transform processing unit 206, the quantization unit 208, and the mode selection unit 260 form a forward signal path of the encoder 20, whereas the inverse quantization unit 210, the inverse transform processing unit 212, the reconstruction unit 214, a buffer 216, the loop filter 220, the decoded picture buffer (decoded picture buffer, DPB) 230, the inter prediction unit 244, and the intra prediction unit 254 form a backward signal path of the encoder. The backward signal path of the encoder 20 corresponds to the signal path of the decoder (refer to the decoder 30 in FIG. 3). The inverse quantization unit 210, the inverse transform processing unit 212, the reconstruction unit 214, the loop filter 220, the decoded picture buffer 230, the inter prediction unit 244, and the intra prediction unit 254 also form a "built-in decoder" of the video encoder 20.

### Picture and picture partitioning (picture and block)

The encoder 20 may be configured to receive, via an input end 201, a picture (or picture data) 17, for example, a picture in a sequence of pictures forming a video or video sequence. The received picture or picture data may also be a pre-processed picture (or pre-processed picture data) 19. For ease of simplicity, the following description refers to the picture 17. The picture 17 may also be referred to as a current picture or to-be-encoded picture (in particular in video coding to distinguish the current picture from other pictures, for example, previously encoded and/or decoded pictures of a same video sequence, namely, a video sequence that also includes the current picture).

A (digital) picture is or may be considered as a two-dimensional array or matrix of samples with intensity values. A sample in the array may also be referred to as a pixel (pixel or pel) (short form of a picture element). Quantities of samples in horizontal and vertical directions (or axes) of the array define a size and/or resolution of the picture. For representation of color, three color components are usually used, to be specific, the picture may be represented as or include three sample arrays. In an RBG format or color space, a picture includes corresponding red, green, and blue sample arrays. However, in video coding, each pixel is usually represented in a luminance/chrominance format or color space, for example, YCbCr, which includes a luminance component indicated by Y (sometimes indicated by L) and two chrominance components indicated by Cb and Cr. The luminance (luma) component Y represents luminance or gray level intensity (for example, both are the same in a gray-scale picture), and the two chrominance (chrominance, chroma for short) components Cb and Cr represent chrominance or color information components. Accordingly, a picture in a YCbCr format includes a luminance sample array of luminance sample values (Y), and two chrominance sample arrays of chrominance values (Cb and Cr). A picture in an RGB format may be converted or transformed into a picture in the YCbCr format and vice versa. The process is also referred to as color transformation or conversion. If a picture is monochrome, the picture may include only a luminance sample array. Accordingly, a picture may be, for example, an array of luminance samples in a monochrome format or an array of luminance samples and two corresponding arrays of chrominance samples in 4:2:0, 4:2:2, and 4:4:4 color formats.

In an embodiment, an embodiment of the video encoder 20 may include a picture partitioning unit (not shown in FIG. 2) configured to partition the picture 17 into a plurality of (typically non-overlapping) picture blocks (coding tree units) 203. These blocks may also be referred to as root blocks, macro blocks (H.264/AVC), coding tree blocks (Coding Tree Blocks, CTBs), or coding tree units (Coding Tree Units, CTUs) in the H.265/HEVC and VVC standards. The partitioning unit may be configured to use a same block size for all pictures of a video sequence and a corresponding grid defining the block size, or to change a block size between pictures or subsets or groups of pictures, and partition each picture into corresponding blocks.

In other embodiments, the video encoder may be configured to directly receive the block 203 of the picture 17, for example, one, several or all blocks forming the picture 17. The picture block 203 may also be referred to as a current picture block or a to-be-encoded picture block.

Like the picture 17, the picture block 203 again is or may be considered as a two-dimensional array or matrix of samples with intensity values (sample values), although of a smaller dimension than the picture 17. In other words, the block 203 may include one sample array (for example, a luminance array in a case of a monochrome picture 17, or a luminance or chrominance array in a case of a color picture) or three sample arrays (for example, one luminance array and two chrominance arrays in a case of a color picture 17) or any other quantity and/or type of arrays depending on the color format used. Quantities of samples in horizontal and vertical directions (or axes) of the block 203 define the size of the block 203. Accordingly, a block may be an M×N (M columns×N rows) array of samples, or an M×N array of transform coefficients.

In an embodiment, the video encoder 20 shown in FIG. 2 may be configured to encode the picture 17 block by block, for example, encoding and prediction are performed on each block 203.

In an embodiment, the video encoder 20 shown in FIG. 2 may be further configured to partition and/or encode the picture by using slices (also referred to as video slices), where the picture may be partitioned or encoded by using one or more slices (typically non-overlapping). Each slice may include one or more blocks (for example, coding tree units CTUs) or one or more groups of blocks (for example, tiles (tiles) in the H.265/HEVC/VVC standard and bricks (bricks) in the VVC standard).

In an embodiment, the video encoder 20 shown in FIG. 2 may be further configured to partition and/or encode the picture by using slices/tile groups (also referred to as video tile groups) and/or tiles (also referred to as video tiles). The picture may be partitioned or encoded by using one or more slices/tile groups (typically non-overlapping), and each slice/tile group may include one or more blocks (for example, CTUs) or one or more tiles. Each tile may be of a rectangular shape and may include one or more blocks (for example, CTUs), for example, complete or fractional blocks.

### Residual calculation

The residual calculation unit 204 may be configured to calculate a residual block 205 based on the picture block 203 and a prediction block 265 (further details about the prediction block 265 are provided later), for example, by subtracting sample values of the prediction block 265 from sample values of the picture block 203, sample by sample (pixel by pixel) to obtain the residual block 205 in a pixel domain.

### Transform

The transform processing unit 206 is configured to apply a transform, for example, a discrete cosine transform (discrete cosine transform, DCT) or discrete sine transform (discrete sine transform, DST), on the sample values of the residual block 205 to obtain transform coefficients 207 in a transform domain. The transform coefficients 207 may also be referred to as transform residual coefficients and represent the residual block 205 in the transform domain.

The transform processing unit 206 may be configured to apply integer approximations of DCT/DST, such as transforms specified in H.265/HEVC. Compared with an orthogonal DCT transform, such integer approximations are usually scaled based on a factor. To preserve a norm of a residual block that is processed by using forward and inverse transforms, an additional scale factor is applied as a part of the transform process. The scale factor is usually selected based on some constraints, for example, the scale factor being a power of two for a shift operation, a bit depth of the transform coefficient, and a tradeoff between accuracy and implementation costs. For example, a specific scale factor is specified for the inverse transform by, for example, the inverse transform processing unit 212 at the encoder side 20 (and a corresponding inverse transform by, for example, an inverse transform processing unit 312 at the decoder side 30), and correspondingly, a corresponding scale factor may be specified for the forward transform by, for example, the transform processing unit 206 at the encoder side 20.

In an embodiment, the video encoder 20 (correspondingly, the transform processing unit 206) may be configured to output transform parameters, for example, types of one or more transforms, for example, directly or after encoding or compressing performed by the entropy encoding unit 270, so that, for example, the video decoder 30 may receive and use the transform parameters for decoding.

### Quantization

The quantization unit 208 may be configured to quantize the transform coefficients 207 to obtain quantized transform coefficients 209, for example, by applying scalar quantization or vector quantization. The quantized transform coefficient 209 may also be referred to as a quantized residual coefficient 209.

A quantization process may reduce a bit depth related to some or all of the transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for scalar quantization, different scales may be applied to achieve finer or coarser quantization. A smaller quantization step corresponds to finer quantization, and a larger quantization step corresponds to coarser quantization. An appropriate quantization step may be indicated by a quantization parameter (quantization parameter, QP). For example, the quantization parameter may be an index to a predefined set of appropriate quantization steps. For example, a smaller quantization parameter may correspond to finer quantization (a smaller quantization step) and a larger quantization parameter may correspond to coarser quantization (a larger quantization step), or vice versa. The quantization may include division by a quantization step and corresponding and/or inverse dequantization, for example, by the inverse quantization unit 210, may include multiplication by the quantization step. Embodiments according to some standards such as the HEVC may be configured to use the quantization parameter to determine the quantization step. Generally, the quantization step may be calculated based on the quantization parameter by using a fixed point approximation of an equation including division. Additional scale factors may be introduced for quantization and dequantization to restore the norm of the residual block, where the norm of the residual block may be modified because of a scale used in the fixed point approximation of the equation for the quantization step and the quantization parameter. In an example implementation, a scale of the inverse transform may be combined with a scale of the dequantization. Alternatively, customized quantization tables may be used and signaled from an encoder to a decoder, for example, in a bitstream. The quantization is a lossy operation, where a larger quantization step indicates a larger loss.

In an embodiment, the video encoder 20 (correspondingly, the quantization unit 208) may be configured to output a quantization parameter (quantization parameter, QP), for example, directly or after encoding or compressing performed by the entropy encoding unit 270, so that, for example, the video decoder 30 may receive and use the quantization parameter for decoding.

### Inverse quantization

The inverse quantization unit 210 is configured to apply the inverse quantization of the quantization unit 208 on the quantized coefficients to obtain dequantized coefficients 211, for example, by applying an inverse scheme of the quantization scheme applied by the quantization unit 208 based on or using the same quantization step as the quantization unit 208. The dequantized coefficients 211 may also be referred to as dequantized residual coefficients 211 and correspond, although usually different from the transform coefficients due to a loss by quantization, to the transform coefficients 207.

### Inverse transform

The inverse transform processing unit 212 is configured to apply the inverse transform of the transform applied by the transform processing unit 206, for example, an inverse discrete cosine transform (discrete cosine transform, DCT) or an inverse discrete sine transform (discrete sine transform, DST), to obtain a reconstructed residual block 213 (or corresponding dequantized coefficients 213) in the pixel domain. The reconstructed residual block 213 may also be referred to as a transform block 213.

### Reconstruction

The reconstruction unit 214 (for example, a summer 214) is configured to add the transform block 213 (namely, the reconstructed residual block 213) to the prediction block 265 to obtain a reconstructed block 215 in the pixel domain, for example, by adding sample values of the reconstructed residual block 213 and the sample values of the prediction block 265.

### Filtering

The loop filter unit 220 (or "loop filter" 220 for short) is configured to filter the reconstructed block 215 to obtain a filtered block 221, or in general, to filter reconstructed samples to obtain filtered sample values. For example, the loop filter unit is configured to smooth pixel transitions or improve video quality. The loop filter unit 220 may include one or more loop filters such as a deblocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. For example, the loop filter unit 220 may include a deblocking filter, a SAO filter and an ALF filter. An order of a filtering process may be the deblocking filter, the SAO filter and the ALF filter. For another example, a process called luminance mapping with chrominance scaling (luma mapping with chroma scaling, LMCS) (namely, an adaptive in-loop reshaper) is added. This process is performed before deblocking. For another example, a deblocking filter process may also be applied to internal sub-block edges, for example, affine sub-block edges, ATMVP sub-block edges, sub-block transform (sub-block transform, SBT) edges, and intra sub-partition (intra sub-partition, ISP) edges. Although the loop filter unit 220 is shown in FIG. 2 as a loop filter, in other configurations, the loop filter unit 220 may be implemented as a post loop filter. The filtered block 221 may also be referred to as a filtered reconstructed block 221.

In an embodiment, the video encoder 20 (correspondingly, the loop filter unit 220) may be configured to output a loop filter parameter (such as a SAO filter parameter, an ALF filter parameter, or an LMCS parameter), for example, directly or after entropy encoding performed by the entropy encoding unit 270, so that, for example, the decoder 30 may receive and use same or different loop filter parameters for decoding.

### Decoded picture buffer

The decoded picture buffer (decoded picture buffer, DPB) 230 may be a reference picture memory that stores reference picture data for use in video data encoding by the video encoder 20. The DPB 230 may be formed by any one of a variety of memory devices, such as a dynamic random-access memory (dynamic random-access memory, DRAM), including a synchronous DRAM (synchronous DRAM, SDRAM), a magnetoresistive RAM (magnetoresistive RAM, MRAM), a resistive RAM (resistive RAM, RRAM), or another type of memory device. The decoded picture buffer 230 may be configured to store one or more filtered blocks 221. The decoded picture buffer 230 may be further configured to store other previously filtered blocks, for example, previously reconstructed and filtered blocks 221, of a same current picture or of different pictures, for example, previously reconstructed blocks, and may provide complete previously reconstructed, for example, decoded pictures (and corresponding reference blocks and samples) and/or a partially reconstructed current picture (and corresponding reference blocks and samples), for example for inter prediction. The decoded picture buffer 230 may be further configured to store one or more unfiltered reconstructed blocks 215, or, in general, unfiltered reconstructed samples, for example, the reconstructed block 215 that is not filtered by the loop filter unit 220, or a reconstructed block or reconstructed sample without any other processing.

### Mode selection (partitioning and prediction)

The mode selection unit 260 includes the partitioning unit 262, the inter prediction unit 244, and the intra prediction unit 254, and is configured to receive or obtain raw picture data, for example, the original block 203 (the current block 203 of the current picture 17), and reconstructed block data, for example, filtered and/or unfiltered reconstructed samples or blocks of the same (current) picture and/or from one or a plurality of previously decoded pictures, for example, from the decoded picture buffer 230 or other buffers (for example, a line buffer, not shown in the figure). The reconstructed block data is used as reference picture data for prediction, for example, inter prediction or intra prediction, to obtain the prediction block 265 or predictor 265.

The mode selection unit 260 may be configured to determine or select partitioning for a current block (including non-partitioning) and a prediction mode (for example, an intra or inter prediction mode) and generate a corresponding prediction block 265, which is used for calculation of the residual block 205 and reconstruction of the reconstructed block 215.

In an embodiment, the mode selection unit 260 may be configured to select the partitioning and the prediction mode (for example, from those supported by or available for the mode selection unit 260). The prediction mode provides an optimal match or a minimum residual (the minimum residual means better compression for transmission or storage), provides minimum signaling overheads (the minimum signaling overheads mean better compression for transmission or storage), or considers or balances both. The mode selection unit 260 may be configured to determine the partitioning and the prediction mode based on bit rate distortion optimization (rate distortion optimization, RDO), for example, select a prediction mode that provides minimum bit rate distortion optimization. The terms "best", "lowest", "optimal" and the like in this specification do not necessarily mean "best", "lowest", "optimal" in general, but may also mean situations in which termination or selection criteria are met. For example, values that exceed or fall below a threshold or other restrictions may result in a "suboptimal selection" but reduce complexity and processing time.

In other words, the partitioning unit 262 may be configured to partition a picture from a video sequence into a sequence of coding tree units (coding tree units, CTUs), and the CTU 203 may be further partitioned into smaller block partitions or sub-blocks (which form the blocks again), for example, iteratively using quad-tree partitioning (quad-tree partitioning, QT), binary-tree partitioning (binary-tree partitioning, BT) or triple-tree partitioning (triple-tree partitioning, TT) or any combination thereof, and to perform, for example, prediction for each of the block partitions or sub-blocks, where the mode selection includes selection of a tree structure of the partitioned block 203 and prediction modes applied to each of the block partitions or sub-blocks.

The following describes in detail partitioning (for example, by the partitioning unit 262) and prediction (for example, by the inter prediction unit 244 and the intra prediction unit 254) that are performed by the video encoder 20.

### Partitioning

The partitioning unit 262 may partition (or split) a coding tree unit 203 into smaller partitions, for example, square or rectangular smaller blocks. For a picture that has three sample arrays, a CTU includes an N×N block of luminance samples together with two corresponding blocks of chrominance samples.

In the H.265/HEVC video coding standard, a frame of picture is partitioned into non-overlapping CTUs. The size of the CTU may be set to 64×64 (the size of the CTU may alternatively be set to another value, for example, the size of the CTU in JVET reference software JEM is increased to 128×128 or 256×256). A 64×64 CTU includes a rectangular sample array with 64 columns and 64 pixels per column, and each pixel includes a luminance component or/and a chrominance component.

According to a QT-based CTU split method in H.265, a CTU is used as a root (root) node of a QT. The CTU is recursively split into several leaf nodes (leaf nodes) in a QT split manner. One node corresponds to one picture region. If a node is not split, the node is referred to as a leaf node, and a picture region corresponding to the node is a CU. If a node is split, a picture region corresponding to the node is split into four picture regions with a same size (a length and a width of the four regions are respectively half the length and the width of the split region), and each region corresponds to one node. Whether these nodes are further split needs to be separately determined. Whether to split a node is indicated by a split flag bit split_cu_flag, corresponding to the node, in a bitstream. A node A is split once into four nodes Bi, where i=0 to 3. Bi is referred to as a child node of A, and A is referred to as a parent node of Bi. A QT depth (qtDepth) of the root node is 0. A QT depth of a node is a QT depth of a parent node of the node plus 1.

In the H.265/HEVC standard, for a picture in a YUV4:2:0 format, a CTU includes one luminance block and two chrominance blocks. If the luminance block and the chrominance block may be split in a same mode, a coding tree is referred to as a luminance-chrominance joint coding tree. In VVC, if a current frame is an I-frame, when a CTU is a node of a preset size (for example, 64×64) in an intra coded frame (I-frame), a luminance block included in the node is split, by a luminance coding tree, into a group of coding units that include only luminance blocks, and a chrominance block included in the node is split, by a chrominance coding tree, into a group of coding units that include only chrominance blocks. Luminance coding tree splitting and chrominance coding tree splitting are independent of each other. Coding trees independently used for the luminance block and chrominance block are referred to as separate trees (separate trees). In H.265, a CU includes a luminance pixel and a chrominance pixel. In standards such as H.266 and AVS3, in addition to a CU that includes both a luminance pixel and a chrominance pixel, there are a luminance CU that includes only a luminance pixel and a chrominance CU that includes only a chrominance pixel.

As described above, the video encoder 20 is configured to determine or select the best or an optimum prediction mode from a set of (pre-determined) prediction modes. The prediction mode set may include, for example, an intra prediction mode and/or an inter prediction mode.

### Intra prediction

An intra prediction mode set may include 35 different intra prediction modes, for example, non-directional modes such as a DC (or average) mode and a planar mode, or directional modes such as those defined in HEVC, or may include 67 different intra prediction modes, for example, non-directional modes such as a DC (or average) mode and a planar mode, or directional modes such as those defined in VVC. For example, several conventional angular intra prediction modes are adaptively replaced with wide-angle intra prediction modes for non-square blocks as defined in VVC. For another example, to avoid division operations for DC prediction, only a longer side is used to compute an average for non-square blocks. In addition, results of intra prediction of the planar mode may be further modified by using a position dependent intra prediction combination (position dependent intra prediction combination, PDPC) method.

The intra prediction unit 254 is configured to use reconstructed samples of neighboring blocks of a same current picture to generate an intra prediction block 265 based on an intra prediction mode in the intra prediction mode set.

The intra prediction unit 254 (or in general the mode selection unit 260) is further configured to output intra prediction parameters (or in general information indicative of the selected intra prediction mode for the block) to the entropy encoding unit 270 in a form of syntax elements 266 for inclusion into the encoded picture data 21, so that, for example, the video decoder 30 may receive and use the prediction parameters for decoding.

### Inter prediction

In a possible implementation, an inter prediction mode set depends on available reference pictures (that is, previous at least partially decoded pictures, for example, stored in the DBP 230) and other inter prediction parameters, for example, whether the entire reference picture or only a part, for example, a search window region around a region of the current block, of the reference picture is used for searching for a best matching reference block, and/or for example, whether pixel interpolation is applied, for example, half-pixel, quarter-pixel and/or 1/16-pixel interpolation, or not.

In addition to the foregoing prediction modes, a skip mode and/or a direct mode may further be applied.

For example, a merge candidate list of an extended merge prediction mode includes the following five types of candidates in order: spatial MVP from spatial neighboring CUs, temporal MVP from collocated CUs, history-based MVP from an FIFO table, pairwise average MVP, and zero MVs. Bilateral matching-based decoder side motion vector refinement (decoder side motion vector refinement, DMVR) may be used to increase accuracy of the MVs of the merge mode. A merge mode with MVD (merge mode with MVD, MMVD) comes from a merge mode with motion vector differences. An MMVD flag is sent right after a skip flag and a merge flag are sent, to specify whether the MMVD mode is used for a CU. A CU-level adaptive motion vector resolution (adaptive motion vector resolution, AMVR) scheme may be used. An AMVR allows MVD of the CU to be coded in different precision. An MVD of a current CU may be adaptively selected based on a prediction mode of the current CU. When a CU is coded in the merge mode, a combined inter/intra prediction (combined inter/intra prediction, CIIP) mode may be applied to the current CU. Weighted averaging of inter and intra prediction signals is performed to obtain CIIP prediction. For affine motion compensation prediction, an affine motion field of a block is described by using motion information of two control point (4-parameter) motion vectors or three control point (6-parameter) motion vectors. Sub-block-based temporal motion vector prediction (sub-block-based temporal motion vector prediction, SbTMVP) is similar to temporal motion vector prediction (temporal motion vector prediction, TMVP) in HEVC, but predicts a motion vector of a sub-CU in the current CU. A bi-directional optical flow (bi-directional optical flow, BDOF), previously referred to as BIO, is a simpler version that requires much less computation, especially in terms of a quantity of multiplications and a value of a multiplier. In a triangle partition mode, a CU is split evenly into two triangular portions through diagonal splitting and anti-diagonal splitting. In addition, a bi-prediction mode is extended beyond simple averaging to allow weighted averaging of two prediction signals.

The inter prediction unit 244 may include a motion estimation (motion estimation, ME) unit and a motion compensation (motion compensation, MC) unit (which are not shown in FIG. 2). The motion estimation unit may be configured to receive or obtain the picture block 203 (the current picture block 203 of the current picture 17) and a decoded picture 231, or at least one or more previously reconstructed blocks, for example, reconstructed blocks of one or more other/different previously decoded pictures 231, for motion estimation. For example, a video sequence may include the current picture and the previously decoded picture 231, or in other words, the current picture and the previously decoded picture 231 may be a part of or form a sequence of pictures forming the video sequence.

For example, the encoder 20 may be configured to select a reference block from a plurality of reference blocks of a same picture or different pictures of a plurality of other pictures and provide a reference picture (or a reference picture index) and/or an offset (spatial offset) between a position (x and y coordinates) of the reference block and a position of the current block as inter prediction parameters to the motion estimation unit. This offset is also referred to as a motion vector (motion vector, MV).

The motion compensation unit is configured to obtain, for example, receive, an inter prediction parameter and perform inter prediction based on or using the inter prediction parameter to obtain an inter prediction block 246. Motion compensation performed by the motion compensation unit may include extracting or generating a prediction block based on a motion/block vector determined through motion estimation, and may further include performing interpolation on sub-pixel precision. Interpolation filtering may generate additional pixel samples from known pixel samples, thus potentially increasing a quantity of candidate prediction blocks that may be used to code a picture block. Upon receiving a motion vector corresponding to a PU of the current picture block, the motion compensation unit may locate a prediction block to which the motion vector points in one of reference picture lists.

The motion compensation unit may further generate syntax elements associated with a block and a video slice for use by the video decoder 30 in decoding the picture blocks of the video slice. In addition or as an alternative to slices and respective syntax elements, tile groups and/or tiles and respective syntax elements may be generated or used.

### Entropy encoding

The entropy encoding unit 270 is configured to apply an entropy encoding algorithm or scheme (for example, a variable length coding (variable length coding, VLC) scheme, a context-adaptive VLC (context-adaptive VLC, CAVLC) scheme, an arithmetic coding scheme, a binarization algorithm, a context-adaptive binary arithmetic coding (context-adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding or another entropy encoding method or technology) to the quantized residual coefficients 209, inter prediction parameters, intra prediction parameters, loop filter parameters and/or other syntax elements to obtain encoded picture data 21 that can be output via an output end 272, for example, in a form of an encoded bitstream 21, so that the video decoder 30 and the like may receive and use the parameters for decoding. The encoded bitstream 21 may be transmitted to the video decoder 30, or stored in a memory for later transmission or retrieval by the video decoder 30.

Other structural variations of the video encoder 20 may be used to encode the video stream. For example, a non-transform-based encoder 20 may quantize a residual signal directly without the transform processing unit 206 for some blocks or frames. In another implementation, the encoder 20 may have the quantization unit 208 and the inverse quantization unit 210 combined into a single unit.

### Decoder and decoding method

FIG. 3 is an example block diagram of the video decoder 30 according to an embodiment of this application. The video decoder 30 is configured to receive encoded picture data 21 (for example, encoded bitstream 21), for example, encoded by the encoder 20, to obtain a decoded picture 331. The encoded picture data or bitstream includes information for decoding the encoded picture data, for example, data that represents picture blocks of an encoded video slice (and/or tile groups or tiles), and associated syntax elements.

In the example in FIG. 3, the decoder 30 includes an entropy decoding unit 304, an inverse quantization unit 310, an inverse transform processing unit 312, a reconstruction unit 314 (for example, a summer 314), a loop filter 320, a decoded picture buffer (DBP) 330, a mode application unit 360, an inter prediction unit 344 and an intra prediction unit 354. The inter prediction unit 344 may be or include a motion compensation unit. In some examples, the video decoder 30 may perform a decoding process generally reciprocal to the encoding process described with reference to the video encoder 100 shown in FIG. 2.

As explained with regard to the encoder 20, the inverse quantization unit 210, the inverse transform processing unit 212, the reconstruction unit 214, the loop filter 220, the decoded picture buffer DPB 230, the inter prediction unit 344 and the intra prediction unit 354 also form a "built-in decoder" of the video encoder 20. Accordingly, the inverse quantization unit 310 may be identical in function to the inverse quantization unit 110, the inverse transform processing unit 312 may be identical in function to the inverse transform processing unit 122, the reconstruction unit 314 may be identical in function to the reconstruction unit 214, the loop filter 320 may be identical in function to the loop filter 220, and the decoded picture buffer 330 may be identical in function to the decoded picture buffer 230. Therefore, the explanations provided for the respective units and functions of the video encoder 20 are correspondingly applicable to the respective units and functions of the video decoder 30.

### Entropy decoding

The entropy decoding unit 304 is configured to parse the bitstream 21 (or in general encoded picture data 21) and perform, for example, entropy decoding on the encoded picture data 21 to obtain quantized coefficients 309 and/or decoded coding parameters (not shown in FIG. 3), for example, any or all of inter prediction parameters (for example, a reference picture index and a motion vector), intra prediction parameters (for example, an intra prediction mode or an index), transform parameters, quantization parameters, loop filter parameters, and/or other syntax elements. The entropy decoding unit 304 may be configured to apply the decoding algorithm or scheme corresponding to the encoding scheme as described with regard to the entropy encoding unit 270 of the encoder 20. The entropy decoding unit 304 may be further configured to provide the inter prediction parameter, the intra prediction parameter and/or the other syntax elements to the mode application unit 360 and other parameters to other units of the decoder 30. The video decoder 30 may receive syntax elements at a video slice level and/or a video block level. In addition or as an alternative to slices and respective syntax elements, tile groups and/or tiles and respective syntax elements may be received or used.

### Inverse quantization

The inverse quantization unit 310 may be configured to receive quantization parameters (quantization parameters, QPs) (or in general information related to the inverse quantization) and quantized coefficients from the encoded picture data 21 (for example, by parsing and/or decoding by the entropy decoding unit 304) and perform, based on the quantization parameters, an inverse quantization on the decoded quantized coefficients 309 to obtain dequantized coefficients 311. The dequantized coefficients 311 may also be referred to as transform coefficients 311. The inverse quantization process may include use of a quantization parameter determined by the video encoder 20 for each video block in the video slice to determine a degree of quantization, and likewise, a degree of inverse quantization that should be applied.

### Inverse transform

The inverse transform processing unit 312 may be configured to receive dequantized coefficients 311, also referred to as transform coefficients 311, and apply a transform to the dequantized coefficients 311 to obtain reconstructed residual blocks 213 in a pixel domain. The reconstructed residual block 213 may also be referred to as a transform block 313. The transform may be an inverse transform, for example, an inverse DCT, an inverse DST, an inverse integer transform, or a conceptually similar inverse transform process. The inverse transform processing unit 312 may be further configured to receive transform parameters or corresponding information from the encoded picture data 21 (for example, by parsing and/or decoding by the entropy decoding unit 304) to determine the transform to be applied to the dequantized coefficients 311.

### Reconstruction

The reconstruction unit 314 (for example, the summer 314) is configured to add the reconstructed residual block 313 to the prediction block 365 to obtain a reconstructed block 315 in the pixel domain, for example, by adding sample values of the reconstructed residual block 313 and sample values of the prediction block 365.

### Filtering

The loop filter unit 320 (either in a coding loop or after the coding loop) is configured to filter the reconstructed block 315 to obtain a filtered block 321, to smooth pixel transitions or improve video quality. The loop filter unit 320 may include one or more loop filters such as a deblocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. For example, the loop filter unit 220 may include a deblocking filter, a SAO filter and an ALF filter. An order of a filtering process may be the deblocking filter, the SAO filter and the ALF filter. For another example, a process called luminance mapping with chrominance scaling (luma mapping with chroma scaling, LMCS) (namely, an adaptive in-loop reshaper) is added. This process is performed before deblocking. For another example, a deblocking filter process may also be applied to internal sub-block edges, for example, affine sub-block edges, ATMVP sub-block edges, sub-block transform (sub-block transform, SBT) edges, and intra sub-partition (intra sub-partition, ISP) edges. Although the loop filter unit 320 is shown in FIG. 3 as a loop filter, in other configurations, the loop filter unit 320 may be implemented as a post loop filter.

### Decoded picture buffer

Decoded video blocks 321 of a picture are then stored in a decoded picture buffer 330, and the decoded picture buffer 330 stores the decoded pictures 331 as reference pictures for subsequent motion compensation for other pictures and/or for output respectively display.

The decoder 30 is configured to output the decoded picture 311, for example, via an output end 312, for presentation to a user or viewing by a user.

### Prediction

The inter prediction unit 344 may be identical in function to the inter prediction unit 244 (in particular to the motion compensation unit) and the intra prediction unit 354 may be identical in function to the inter prediction unit 254, and performs splitting or partitioning decisions and prediction based on the partitioning and/or prediction parameters or respective information received from the encoded picture data 21 (for example, by parsing and/or decoding by the entropy decoding unit 304). The mode application unit 360 may be configured to perform the prediction (intra or inter prediction) per block based on reconstructed blocks, blocks or respective samples (filtered or unfiltered) to obtain the prediction block 365.

When the video slice is coded as an intra coded (intra coded, I) slice, the intra prediction unit 354 of the mode application unit 360 is configured to generate the prediction block 365 for a picture block of the current video slice based on a signaled intra prediction mode and data from previously decoded blocks of the current picture. When the video picture is coded as an inter coded (for example, B or P) slice, the inter prediction unit 344 (for example, the motion compensation unit) of the mode application unit 360 is configured to generate the prediction block 365 for a video block of the current video slice based on the motion vectors and other syntax elements received from the entropy decoding unit 304. For inter prediction, the prediction blocks may be generated from a reference picture in a reference picture list. The video decoder 30 may construct reference frame lists: a list 0 and a list 1, by using a default construction technology based on reference pictures stored in the DPB 330. The same or similar process may be applied for or by embodiments using tile groups (for example, video tile groups) and/or tiles (for example, video tiles) in addition or alternatively to slices (for example, video slices), for example, a video may be coded by using I, P or B tile groups and/or tiles.

The mode application unit 360 is configured to determine the prediction information for a video block of the current video slice by parsing the motion vectors or other syntax elements, and use the prediction information to generate the prediction block for the current video block being decoded. For example, the mode application unit 360 uses some of the received syntax elements to determine a prediction mode (for example, intra prediction or inter prediction) used to code the video blocks of the video slice, an inter prediction slice type (for example, a B slice, a P slice, or a GPB slice), construction information for one or more of the reference picture lists for the slice, motion vectors for each inter coded video block of the slice, an inter prediction status for each inter coded video block of the slice, and other information to decode the video blocks in the current video slice. The same or similar process may be applied for or by embodiments using tile groups (for example, video tile groups) and/or tiles (for example, video tiles) in addition or alternatively to slices (for example, video slices), for example, a video may be coded by using I, P or B tile groups and/or tiles.

In an embodiment, the video encoder 30 in FIG. 3 may be further configured to partition and/or decode a picture by using slices (also referred to as video slices), where the picture may be partitioned or decoded by using one or more slices (typically non-overlapping). Each slice may include one or more blocks (for example, CTUs) or one or more groups of blocks (for example, tiles in the H.265/HEVC/VVC standard and bricks in the VVC standard).

In an embodiment, the video decoder 30 shown in FIG. 3 may be further configured to partition and/or decode the picture by using slices/tile groups (also referred to as video tile groups) and/or tiles (also referred to as video tiles). The picture may be partitioned or decoded by using one or more slices/tile groups (typically non-overlapping), and each slice/tile group may include one or more blocks (for example, CTUs) or one or more tiles. Each tile may be of a rectangular shape and may include one or more blocks (for example, CTUs), for example, complete or fractional blocks.

Other variations of the video decoder 30 may be used to decode the encoded picture data 21. For example, the decoder 30 may generate an output video stream without the loop filter unit 320. For example, a non-transform-based decoder 30 may inversely quantize the residual signal directly without the inverse transform processing unit 312 for some blocks or frames. In another implementation, the video decoder 30 may have the inverse quantization unit 310 and the inverse transform processing unit 312 combined into a single unit.

It should be understood that, in the encoder 20 and the decoder 30, a processing result of a current step may be further processed and then output to the next step. For example, after interpolation filtering, motion vector derivation or loop filtering, a further operation, such as clip (clip) or shift (shift), may be performed on the processing result of the interpolation filtering, motion vector derivation or loop filtering.

It should be noted that further operations may be applied to the derived motion vectors of a current block (including but not limit to control point motion vectors in an affine mode, sub-block motion vectors in affine, planar, and ATMVP modes, temporal motion vectors, and so on). For example, the value of the motion vector is constrained to a predefined range based on a representation bit of the motion vector. If the representation bit of the motion vector is bitDepth, the range is from -2^(bitDepth-1) to 2^(bitDepth-1)-1, where the "^" represents exponentiation. For example, if bitDepth is set to 16, the range is from -32768 to 32767, or if bitDepth is set to 18, the range is from -131072 to 131071. For example, the value of the derived motion vector (for example, the MVs of four 4×4 sub-blocks in one 8×8 block) is constrained such that a max difference between integer parts of the MVs of the four 4×4 sub-blocks does not exceed N pixels, for example, does not exceed one pixel. Two methods for constraining the motion vector based on the bitDepth are provided herein.

Although embodiments have been primarily described based on video coding, it should be noted that embodiments of the coding system 10, the encoder 20 and the decoder 30 and the other embodiments described in this specification may also be configured for still picture processing or coding, that is, the processing or coding of an individual picture independent of any preceding or consecutive picture in video coding. In general, only inter prediction units 244 (encoder) and 344 (decoder) may not be available in case the picture processing is limited to a single picture 17. All other functions (also referred to as tools or technologies) of the video encoder 20 and video decoder 30 may equally be used for still picture processing, for example, residual calculation 204/304, transform 206, quantization 208, inverse quantization 210/310, (inverse) transform 212/312, partitioning 262/362, intra prediction 254/354, and/or loop filtering 220/320, and entropy encoding 270 and entropy decoding 304.

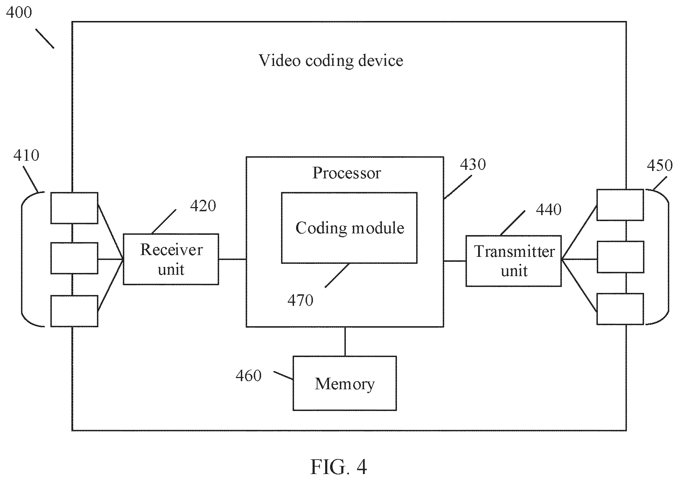

FIG. 4 is an example block diagram of a video coding device 400 according to an embodiment of this application. The video coding device 400 is suitable for implementing the disclosed embodiments as described in this specification. In an embodiment, the video coding device 400 may be a decoder such as the video decoder 30 in FIG. 1A or an encoder such as the video encoder 20 in FIG. 1A.

The video coding device 400 includes ingress ports 410 (or input ports 410) and a receiver unit (receiver unit, Rx) 420 for receiving data; a processor, a logic unit, or a central processing unit (central processing unit, CPU) 430 for processing the data; a transmitter unit (transmitter unit, Tx) 440 and egress ports 450 (or output ports 450) for transmitting the data; and a memory 460 for storing the data. The video coding device 400 may also include optical-to-electrical (optical-to-electrical, OE) components and electrical-to-optical (electrical-to-optical, EO) components coupled to the ingress ports 410, the receiver unit 420, the transmitter unit 440, and the egress ports 450 for egress or ingress of optical or electrical signals.

The processor 430 is implemented by hardware and software. The processor 430 may be implemented as one or more processor chips, cores (for example, a multi-core processor), FPGAs, ASICs, and DSPs. The processor 430 communicates with the ingress ports 410, the receiver unit 420, the transmitter unit 440, the egress ports 450, and the memory 460. The processor 430 includes a coding module 470. The coding module 470 implements the disclosed embodiments described above. For example, the coding module 470 implements, processes, prepares, or provides various coding operations. Therefore, the coding module 470 provides a substantial improvement to functions of the video coding device 400 and affects switching of the video coding device 400 to a different state. Alternatively, the coding module 470 is implemented as instructions stored in the memory 460 and executed by the processor 430.

The memory 460 may include one or more disks, tape drives, and solid-state drives and may be used as an over-flow data storage device, to store programs when such programs are selected for execution, and to store instructions and data that are read during program execution. The memory 460 may be volatile and/or nonvolatile and may be a read-only memory (read-only memory, ROM), a random access memory (random access memory, RAM), a ternary content-addressable memory (ternary content-addressable memory, TCAM), and/or a static random-access memory (static random-access memory, SRAM).

Scalable video encoding, also referred to as scalable video encoding, is an extended standard, namely, scalable video coding (scalable video coding, SVC) of an extended coding standard (in general advanced video coding (advanced video coding, AVC) (H.264)) of a current video coding standard, or an extended standard, namely, scalable high efficiency video coding (scalable high efficiency video coding, SHVC) of high efficiency video coding (high efficiency video coding, HEVC) (H.265). Scalable video encoding is mainly used to resolve a packet loss, a delay, and jitter caused by a real-time change of a network bandwidth in real-time video transmission.

A basic structure in scalable video encoding may be referred to as a layer. In a scalable video encoding technology, space domain classification (resolution classification) is performed on an original picture block, to obtain bitstreams at layers of different resolutions. The resolution may be a size of a picture block in pixels. A resolution of a low layer is low, and a resolution of a high layer is not lower than the resolution of the low layer. Alternatively, time domain classification (frame rate classification) is performed on an original picture block, to obtain bitstreams at layers of different frame rates. The frame rate may be a quantity of picture frames included in a video in unit time. A frame rate of a low layer is low, and a frame rate of a high layer is not lower than the frame rate of the low layer. Alternatively, quality domain classification is performed on an original picture block, to obtain bitstreams at layers of different coding quality. The coding quality may be quality of a video. A picture distortion degree of a low layer is high, and a picture distortion degree of a high layer is not higher than the picture distortion degree of the lower layer.

Generally, a layer referred to as a base layer is a lowest layer in scalable video encoding. In space domain classification, a picture block at a base layer is encoded at a lowest resolution; in the time domain classification, a picture block at a base layer is encoded at a lowest frame rate; and in quality domain classification, a picture block at a base layer is encoded at a highest QP or a lowest bit rate. That is, the base layer is a layer with lowest quality in scalable video encoding. A layer referred to as an enhancement layer is a layer above the base layer in scalable video encoding, and may be classified into a plurality of enhancement layers from low to high. A lowest enhancement layer obtains a combined bitstream through encoding based on encoding information obtained by the basic layer. An encoding resolution of the lowest enhancement layer is higher than that of the base layer, a frame rate of the lowest enhancement layer is higher than that of the base layer, or a bit rate of the lowest enhancement layer is greater than that of the base layer. A higher enhancement layer may encode a picture block with higher quality based on encoding information of a lower enhancement layer.

For example, FIG. 5 is a schematic diagram of example layers of scalable video encoding according to this application. As shown in FIG. 5, an original picture block is sent to a scalable encoder, and then may be classified into a picture block at a base layer B and picture blocks at enhancement layers (E1 to En, n≥1) based on different encoding configurations, and then all the picture blocks are separately encoded to obtain a bitstream including a bitstream at the base layer and a bitstream at the enhancement layer. The bitstream at the base layer is generally a bitstream obtained by encoding the picture block based on parameters such as a lowest resolution, a lowest frame rate, or lowest encoding quality. The bitstream at the enhancement layer is a bitstream obtained by encoding the picture block based on parameters such as a high resolution, a high frame rate, or high encoding quality on a basis of the base layer. As a quantity of enhancement layers increases, a space domain layer, a time domain layer, or a quality layer for encoding also becomes higher. When the encoder transmits the bitstream to a decoder, transmission of the bitstream at the base layer is ensured first. When a network has a margin, bitstreams at higher layers are gradually transmitted. The decoder first receives and decodes the bitstream at the base layer, decodes, based on the received bitstream at the enhancement layer, bitstreams at layers with increasing high space domain level, time domain level, or quality level in an order from a lower layer to a higher layer, and then superimposes decoding information of a higher layer on a reconstructed block at a lower layer, to obtain a reconstructed block with a higher resolution, a higher frame rate, or higher quality.

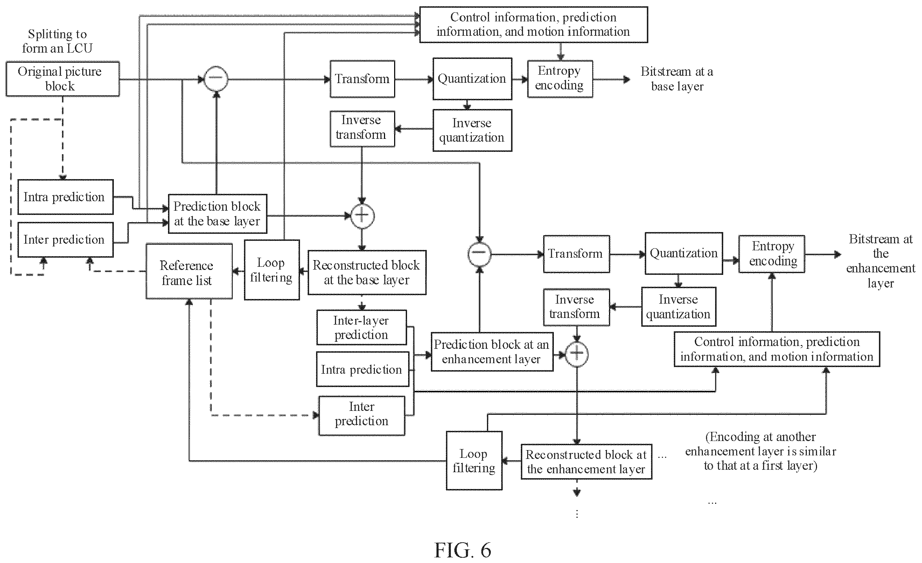

Each picture of a video sequence is usually partitioned into a set of non-overlapping blocks, and coding is usually performed at a block level. In other words, at the encoder, a video is usually processed, that is, encoded, at a block (picture block) level. For example, a prediction block is generated through spatial (intra picture) prediction and temporal (inter picture) prediction, the prediction block is subtracted from a picture block (block being processed or to be processed) to obtain a residual block, and the residual block is transformed in a transform domain and quantized to reduce an amount of data that is to be transmitted (compressed). The encoder further needs to perform inverse quantization and inverse transform to obtain a reconstructed residual block, and then adds a sample value of the reconstructed residual block to a sample value of the prediction block to obtain a reconstructed block. The reconstructed block at the base layer is a reconstructed block obtained by performing the foregoing operations on a base layer picture block obtained by classifying an original picture block. For example, FIG. 6 is an example flowchart of an encoding method of an enhancement layer according to this application. As shown in FIG. 6, the encoder obtains a prediction block at a base layer based on the original picture block (for example, an LCU), then calculates a difference between corresponding samples in the original picture block and the prediction block at the base layer to obtain a residual block at the base layer, performs transform and quantization on the residual block at the base layer after splitting, and performs entropy encoding on base layer encoding control information, prediction information, motion information, and the like to obtain a bitstream at the base layer. The encoder performs inverse quantization and inverse transform on a quantized quantization coefficient to obtain a reconstructed residual block at the base layer, and then performs summation on corresponding samples in the prediction block at the base layer and the reconstructed residual block at the base layer to obtain the reconstructed block at the base layer.

When viewing an image or a video by using a terminal device (for example, a mobile phone, a tablet, or a large screen), a user sometimes manually zooms in a local region (for example, a subject or a region of interest (region of interest, ROI) in the image or the video) of the image or the video to view details about the local region. In this case, the picture processing method provided in embodiments of this application may process the local region, to resolve a problem that a zoomed-in picture is unclear and blurred.

Optionally, an application scenario of the picture processing method may be a service related to picture/video capture, storage, and display in an electronic device, for example, a gallery or Huawei Video. The electronic device may be, for example, an intelligent terminal, a tablet, or a wearable device. The electronic device has both picture compression and picture decompression functions. To be specific, the electronic device captures an original picture/video, compresses the original picture/video to obtain a compressed picture/video, and then stores the compressed picture/video in a memory of the electronic device. When the user wants to view a picture/video, the electronic device decompresses the compressed picture/video to obtain a reconstructed picture/video, and displays the reconstructed picture/video on a screen. For the electronic device, refer to the embodiment shown in FIG. 1B, but this does not constitute a limitation on the electronic device.

Optionally, an application scenario of the picture processing method may alternatively be a service related to picture/video capture, storage, or transmission, such as device-cloud sharing, video surveillance, and screen projection, for example, Huawei Cloud, video surveillance, live broadcast, and album/video projection. Generally, the application scenario includes a source device and destination device of a picture/video. The source device has a picture compression function. The source device captures an original picture/video, compresses the original picture/video to obtain a bitstream, and then stores the bitstream in a memory of an electronic device. The destination device has a picture decompression function. When the user wants to view a picture/video, the destination device requests the source device to load the bitstream, and the destination device decompresses the bitstream to obtain a reconstructed picture/video, and displays the reconstructed picture/video on a screen. For the source device and the destination device, refer to the embodiment shown in FIG. 1A, but the source device and the destination device are not limited.

For ease of description, the following embodiments are described in a manner of an encoder side and a decoder side. It should be understood that the encoder side and the decoder side may be disposed on a same electronic device, for example, a smartphone; or the encoder side and the decoder side may be disposed on different devices, for example, the encoder side is on the cloud and the decoder side is on a smartphone, the encoder side is on a surveillance camera and the decoder side is on a surveillance center platform, or the encoder side is on a smartphone and the decoder side is on a large screen.

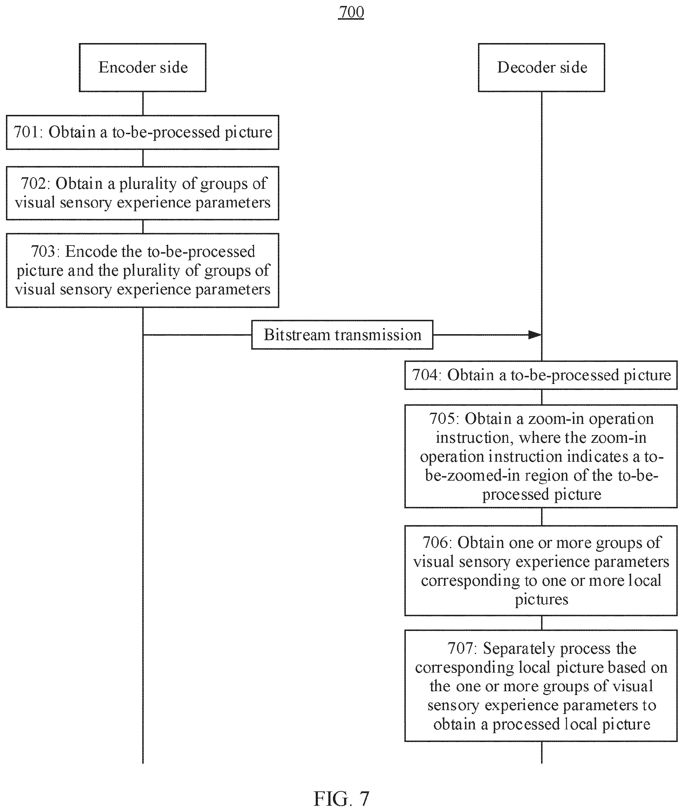

FIG. 7 is an example flowchart of a picture processing method according to this application. A process 700 may be performed by an encoder side and a decoder side. For convenience, the encoder side and the decoder side are described together in the process 700. In a specific implementation process, the encoder side and the decoder side may separately perform a corresponding step. The process 700 is described as a series of steps or operations. It should be understood that the steps or operations of the process 700 may be performed in various sequences and/or simultaneously, and are not limited to an execution sequence shown in FIG. 7.

At the encoder side, the process 700 includes the following steps.

701: The encoder side obtains a to-be-processed picture.

The to-be-processed picture may also be referred to as a global picture. Usually, a photographing apparatus may capture, toward a target region, a picture including the target region, and the complete picture is the global picture.

The encoder side may directly capture the to-be-processed picture by using the photographing apparatus of the encoder side, may extract the to-be-processed picture from a gallery, or may obtain the to-be-processed picture from another place through a network, a storage medium, or the like. This is not specifically limited in embodiments of this application.

702: The encoder side obtains a plurality of groups of visual sensory experience parameters.

The encoder side may first split the to-be-processed picture to obtain a plurality of candidate local pictures, and then obtain the plurality of groups of visual sensory experience parameters corresponding to the plurality of candidate local pictures.

Because the candidate local picture is obtained by splitting the to-be-processed picture, each candidate local picture corresponds to a local region of the to-be-processed picture. For example, quadtree partitioning is performed on the to-be-processed picture, and a candidate local picture in an upper left corner corresponds to a quarter local region located in an upper left corner of the to-be-processed picture.

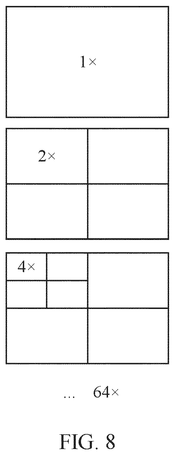

A split method may include splitting based on a pixel feature of the to-be-processed picture, for example, splitting based on pixel luminance to obtain a dark region and a bright region of the picture, and splitting based on a pixel color to obtain an ROI and a picture subject region. The split method may also include splitting based on a size of the to-be-processed picture. For example, FIG. 8 is a schematic diagram of a pyramid split manner. As shown in FIG. 8, 1× indicates a global picture, 2× indicates a local picture obtained by horizontally and vertically zooming out the global picture by 2 times, 4× indicates a local picture obtained by horizontally and vertically zooming out the global picture by 4 times, and 64× indicates a local picture obtained by horizontally and vertically zooming out the global picture by 64 times. This embodiment may support horizontally and vertically zooming out the global picture by a maximum of 64 times. All local pictures obtained through splitting may be referred to as candidate local pictures. It should be noted that, in this embodiment of this application, the to-be-processed picture may be split in another manner, for example, a quadtree split manner or a binary tree split manner. This is not specifically limited herein.

The visual sensory experience parameter may include four types of parameters: luminance, contrast, a color, and details. A pixel feature of the candidate local picture is analyzed, and a picture presented after processing is used to simulate (approximate or enhance) visual sensory experience for a real scene that is of a to-be-zoomed-in region and that is perceived by human eyes, so that the visual sensory experience parameter corresponding to the candidate local picture can be determined. It can be learned that, in this embodiment of this application, there is a correspondence between the visual sensory experience parameter and the candidate local picture, and a group of visual sensory experience parameters may be determined for any candidate local picture based on a pixel feature of the candidate local picture, to adjust at least one of luminance, contrast, a color, and details of the candidate local picture.

For example, for a candidate local picture in the dark region of the picture, luminance and contrast may be improved, a color is adapted to a local dark region, and underexposure details are increased. In this way, it may be determined that a visual sensory experience parameter of the candidate local picture includes four types of parameters: luminance, contrast, a color, and details, and a specific value of the parameter corresponds to the foregoing adjustment requirement. For another example, for a candidate local picture in the bright region of the picture, luminance and contrast may be reduced, a color is adapted to a local bright region, and overexposure details are increased. In this way, it may be determined that a visual sensory experience parameter of the candidate local picture includes four types of parameters: luminance, contrast, a color, and details, and a specific value of the parameter corresponds to the foregoing adjustment requirement. For another example, for a candidate local picture in the picture subject region, luminance and contrast may be fine-tuned, and a color is adapted to a picture subject. In this way, it may be determined that a visual sensory experience parameter of the candidate local picture includes three types of parameters: luminance, contrast, and a color, and a specific value of the parameter corresponds to the foregoing adjustment requirement.

For example, the following describes a method for determining the visual sensory experience parameter.

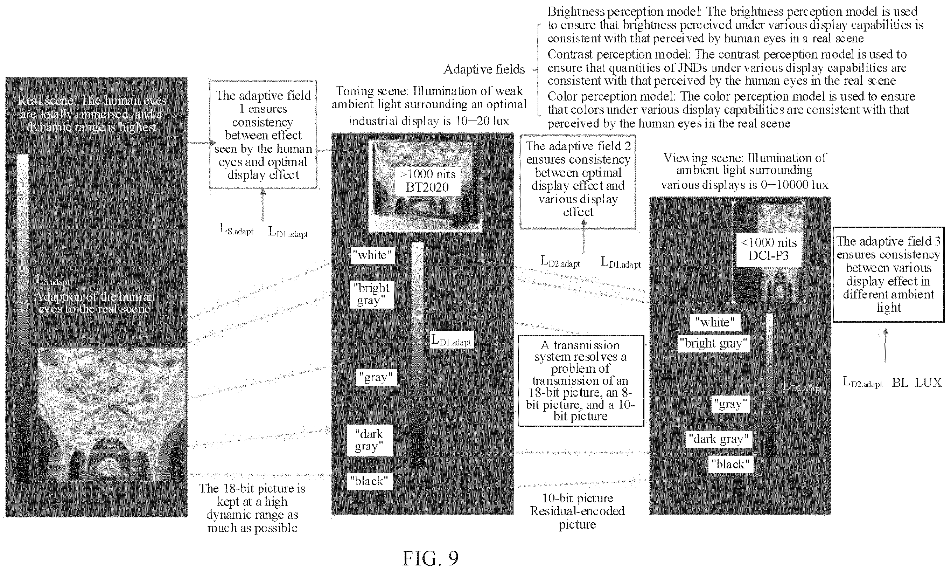

FIG. 9 is a schematic diagram of determining the visual sensory experience parameter. As shown in FIG. 9, three adaptive fields are constructed: a brightness perception model (brightness perception model), a contrast perception model (contrast perception model), and a color perception model (color perception model). The brightness perception model is used to ensure that brightness perceived under various display capabilities is consistent with that perceived by the human eyes in the real scene; the contrast perception model is used to ensure that quantities of just noticeable differences (just noticeable differences, JNDs) under various display capabilities are consistent with that perceived by the human eyes in the real scene; and the color perception model is used to ensure that colors under various display capabilities are consistent with that perceived by the human eyes in the real scene. The adaptive field can resolve problems of mapping from a natural scene to an optimal display D1, mapping from the optimal display D1 to various displays D2, and mapping from various displays D2 to various viewing environments. $\left[\begin{matrix}{L}_{s} . adapt \\ {L}_{D 1} . adapt \\ {L}_{D 2} . adapt\end{matrix}\right] = \left[\begin{matrix}f \left(max\left(hist\left(X, Y, Z\right)\right)\right) \\ f \left(max\left(hist\left(R, G, B\right)\right)\right) \times D 1 _ peak _ lum \\ f \left(max\left(hist\left(R, G, B\right)\right)\right) \times D 2 _ peak _ lum \times D 2 _ lux _ reflect\end{matrix}\right]$

Lₛ.adapt represents mapping of the human eyes to the natural scene; L_{D1}.adapt represents adaptation of the human eyes to the optimal display D1; L_{D2}.adapt represents adaptation of the human eyes to various displays D2; f() is a function and may be obtained by fitting experimental data; hist() represents a histogram; X, Y, and Z indicate stimulus values of light, in X, Y, and Z directions, that enters human eyes in a real world; RGB indicates pixel values of a picture; hist(X, Y, Z) indicates histograms in the X, Y, and Z directions, hist(R, G, B) indicates histograms in RGB color channels, max() indicates a maximum value of each range in the histogram, D1_peak_lum indicates display peak luminance of the optimal display D1, D2_peak_lum indicates display peak luminance of various displays D2, and D2_lux_reflect indicates reflectivity of ambient light on various displays D2.

The brightness model defines a plurality of perception ranges, for example, "white", "bright gray", "gray", "dark gray", and "black". In the gray range, L.adapt describes brightness perception of each object in a field of view by the human eyes in a formed adaptive field with a specific size of field of view. The luminance model does not allow crossing the perception range after contrast adjustment (tone mapping, TM). For example, a pixel value that falls within the white range is not allowed to fall into the bright gray range after TM.

The contrast perception model describes a degree of perception of the human eyes on contrast in the formed adaptive field with the specific size of field of view. The perception model does not allow a significant decrease in the quantity of JNDs after TM, for example, a threshold is lower than 10%.

The color perception model describes adaptation capabilities of the human eyes to chromaticity of different light sources in the formed adaptive field with the specific size of field of view, so that a perceived object color tends to a color in a memory (for example, white paper is still perceived to be white). Pixel value adjustment through an adaptive change of the chromaticity of the light source may be implemented according to a chromatic adaptation transform algorithm (Chromatic Adaptation Transform).

It should be noted that the foregoing process merely describes an example of the method for determining the visual sensory experience parameter. In this embodiment of this application, the visual sensory experience parameter may alternatively be determined in another manner. This is not specifically limited herein.

703: The encoder side encodes the to-be-processed picture and the plurality of groups of visual sensory experience parameters.

After obtaining the plurality of groups of visual sensory experience parameters, the encoder side may encode the to-be-processed picture and the plurality of groups of visual sensory experience parameters. For an encoding scheme of the to-be-processed picture, refer to a joint photographic experts group (joint photographic experts group, JPEG) coding standard, a hybrid video coding standard, or a scalable video encoding standard. An end-to-end encoding scheme may alternatively be used. Details are not described herein. The plurality of groups of visual sensory experience parameters may be encoded as metadata (metadata), and refer to the CUVA1.0 standard. In addition, the encoder side may further write, into a bitstream, a split manner of the to-be-processed picture and a correspondence between the candidate local picture and the visual sensory experience parameter, so that the decoder side may obtain, by parsing the bitstream, a plurality of candidate local pictures and a plurality of groups of visual sensory experience parameters corresponding to the plurality of candidate local pictures. For a manner of writing the foregoing information into the bitstream, refer to the conventional technology, provided that the decoder side can learn of the split manner of the to-be-processed picture and the correspondence between the candidate local pictures and the plurality of groups of visual sensory experience parameters. This is not specifically limited in embodiments of this application.

For example, compressed data or a bitstream obtained by encoding one to-be-processed picture at the encoder side is stored in an APP field of a joint photographic experts group (joint photographic experts group, JPEG) file or an enhancement layer of H264/265, and corresponding metadata is also stored, to ensure consistent display effect of screens with different display capabilities.

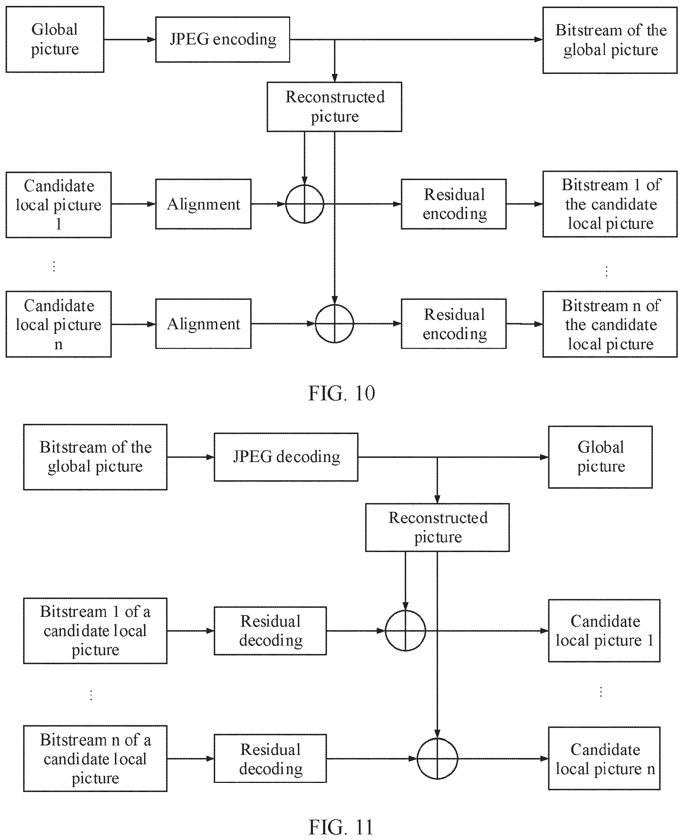

FIG. 10 is an example diagram of a picture encoding procedure. As shown in FIG. 10, JPEG encoding is performed on a to-be-encoded picture (global picture) to obtain a bitstream of the global picture. Correspondingly, the encoder side performs reverse JPEG decoding to obtain a reconstructed picture of the global picture.

For each candidate local picture, the candidate local picture is first aligned with the global picture, to be specific, a pixel that corresponds to a pixel included in the candidate local picture and that is in the global picture is determined, then a difference is calculated between the corresponding pixel in the reconstructed picture and the corresponding pixel in the candidate local picture to obtain a residual of the candidate local picture, and the residual of the candidate local picture is encoded to obtain a bitstream of the candidate local picture. The bitstream corresponding to the residual may be placed in some fields of a general encoder. For example, for an image, if the general encoder is a JPEG, the bitstream corresponding to the residual is placed in an extended field of the JPEG, an APP 9, or an APP 10. For example, for a video, if the general encoder is H.265, the bitstream corresponding to the residual is placed at a SEI layer. In addition, the encoder side generates metadata based on the plurality of groups of visual sensory experience parameters, to ensure consistent effect of screens with different display capabilities. For a generation method, refer to the CUVA1.0 standard. The metadata may be placed before, after, or in the middle of the bitstream corresponding to the residual. This is not specifically limited herein.

In this embodiment of this application, the metadata generation method is promoted to each candidate local picture, to ensure consistent display effect of each candidate local picture on screens with different display capabilities.

The bitstream obtained by the encoder side may be transmitted to the decoder side through a wired or wireless communication link, or may be transmitted to the decoder side through an internal bus of an electronic device.

At the decoder side, the process 700 includes the following steps.

704: The decoder side obtains a to-be-processed picture.

The decoder side may decode the bitstream in a decoding manner corresponding to the encoder side to obtain the to-be-processed picture.

FIG. 11 is an example diagram of a picture decoding procedure. As shown in FIG. 11, the decoder side performs JPEG decoding on the bitstream of the global picture to obtain a reconstructed picture of the global picture (to-be-processed picture). For a bitstream of each candidate local picture, the decoder side performs residual decoding on the bitstream to obtain a residual of the candidate local picture, and then sums the residual of the candidate local picture and a corresponding pixel of the reconstructed picture of the global picture to obtain the candidate local picture.

705: The decoder side obtains a zoom-in operation instruction, where the zoom-in operation instruction indicates a to-be-zoomed-in region of the to-be-processed picture.

The zoom-in operation instruction is generated through an operation performed on the to-be-processed picture. For example, a user views a picture on a mobile phone. When the user wants to zoom in a local region of the picture to view details, the user may use a thumb and an index finger to make a two-finger zoom-in gesture at a position at which the local region is displayed on a screen of the mobile phone, or use the thumb and the index finger to double-tap the position at which the local region is displayed on the screen of the mobile phone, to display the picture in the local region on the screen of the mobile phone. The gesture may generate the foregoing zoom-in operation instruction. For another example, a user projects a video on a mobile phone to a large screen for playing. When the user wants to zoom in a video in a local region for playing, the user may use a thumb and an index finger to make a two-finger zoom-in gesture at a position at which the local region is displayed on a screen of the mobile phone, or use the thumb and the index finger to double-tap the position at which the local region is displayed on the screen of the mobile phone, to display the video in the local region on the large screen. The gesture may generate the foregoing zoom-in operation instruction. It should be noted that the zoom-in operation instruction may alternatively be generated in another manner. This is not specifically limited in embodiments of this application.

As described above, the zoom-in operation instruction not only indicates an instruction for zooming in a picture, but also indicates the to-be-zoomed-in region, which is associated with a position corresponding to an operation for generating the zoom-in operation instruction, for example, a rectangular region whose start position of the two-finger zoom-in gesture is used as a center and whose side length is a set length; or a circular region whose start position of the two-finger zoom-in gesture is used as a center and whose radius is a set length. It should be noted that the to-be-zoomed-in region may alternatively be determined in another manner. This is not specifically limited in embodiments of this application.

706: The decoder side obtains one or more groups of visual sensory experience parameters corresponding to the one or more local pictures.

In this embodiment of this application, after determining the to-be-zoomed-in region, the decoder side may obtain, based on the information carried in the bitstream, the split manner of the to-be-processed picture and the correspondence between the plurality of candidate local pictures obtained through splitting and the plurality of groups of visual sensory experience parameters. In view of this, the decoder side may first split the to-be-processed picture in the split manner to obtain the plurality of candidate local pictures, and then determine, from the plurality of candidate local pictures, one or more local pictures corresponding to the to-be-zoomed-in region, for example, determine the candidate local picture included in the to-be-zoomed-in region based on a position of the to-be-zoomed-in region, where the candidate local picture is a local picture corresponding to the to-be-zoomed-in region.

As described at the encoder side, the plurality of candidate local pictures correspond to one group of visual sensory experience parameters, and the decoder side may obtain, by decoding the bitstream (for example, parsing the metadata), the one or more groups of visual sensory experience parameters corresponding to the one or more local pictures.

707: The decoder side separately processes the corresponding local picture based on the one or more groups of visual sensory experience parameters to obtain a processed local picture.

The decoder side separately processes the corresponding local picture based on the obtained one or more groups of visual sensory experience parameters to obtain the processed local picture. A picture that can be presented by the processed local picture is used to simulate (approximate or enhance) the visual sensory experience for the real scene that is of the to-be-zoomed-in region and that is perceived by the human eyes.

Processing that may be performed on the corresponding local picture by the decoder side based on parameter content included in one group of visual sensory experience parameters includes at least one of the following:
when the visual sensory experience parameter includes a luminance parameter, performing luminance adjustment on the corresponding local picture;
when the visual sensory experience parameter includes a contrast parameter, performing contrast adjustment on the corresponding local picture;
when the visual sensory experience parameter includes a color parameter, performing color adjustment on the corresponding local picture; or
when the visual sensory experience parameter includes a detail parameter, performing detail adjustment on the corresponding local picture.

For example, for a local picture in the dark region of the picture, luminance and contrast may be improved, a color is adapted to a local dark region, and underexposure details are increased. In this way, it may be determined that a visual sensory experience parameter of the local picture includes four types of parameters: luminance, contrast, a color, and details, and a specific value of the parameter corresponds to the foregoing adjustment requirement. For another example, for a local picture in the bright region of the picture, luminance and contrast may be reduced, a color is adapted to a local bright region, and overexposure details are increased. In this way, it may be determined that a visual sensory experience parameter of the local picture includes four types of parameters: luminance, contrast, a color, and details, and a specific value of the parameter corresponds to the foregoing adjustment requirement. For another example, for a local picture in the picture subject region, luminance and contrast may be fine-tuned, and a color is adapted to a picture subject. In this way, it may be determined that a visual sensory experience parameter of the local picture includes three types of parameters: luminance, contrast, and a color, and a specific value of the parameter corresponds to the foregoing adjustment requirement.

In a possible implementation, the decoder side may implement detail adjustment on the one or more local pictures by using the following methods:
(1) A plurality of reference pictures are obtained, where the plurality of reference pictures and the to-be-processed picture are obtained by shooting a same scene by a plurality of cameras, and detail adjustment is performed on the corresponding local picture based on the plurality of reference pictures.
   When capturing the to-be-processed picture, the encoder side may simultaneously turn on the plurality of cameras to shoot the same scene, to capture the plurality of reference pictures based on different focal lengths, different angles, and the like. Because the plurality of reference pictures are obtained by shooting the same scene, even if details are not shot in the to-be-processed picture, the details may be captured by another camera. In this way, the encoder side may obtain a detail parameter of the to-be-processed picture based on the plurality of reference pictures, and the decoder side may perform detail adjustment on the to-be-zoomed-in region based on the detail parameter.
(2) A plurality of historical pictures whose similarities to the to-be-processed picture exceed a preset threshold are obtained, and detail adjustment is performed on the corresponding local picture based on the plurality of historical pictures.

The user may shoot a plurality of pictures for the same scene. When the similarity between the historical picture and the to-be-processed picture is high, it may be considered that the historical picture may provide a detail reference for the to-be-processed picture. In this way, the encoder side may obtain a detail parameter of the to-be-processed picture based on the plurality of historical pictures, and the decoder side may perform detail adjustment on the to-be-zoomed-in region based on the detail parameter.

In a possible implementation, the decoder side may store the processed local picture locally, so that when the user subsequently zooms in the same region again, the processed local picture is extracted from the memory and directly displayed.

In a possible implementation, the decoder side may transmit the processed local picture to a display apparatus (for example, a display) for displaying.

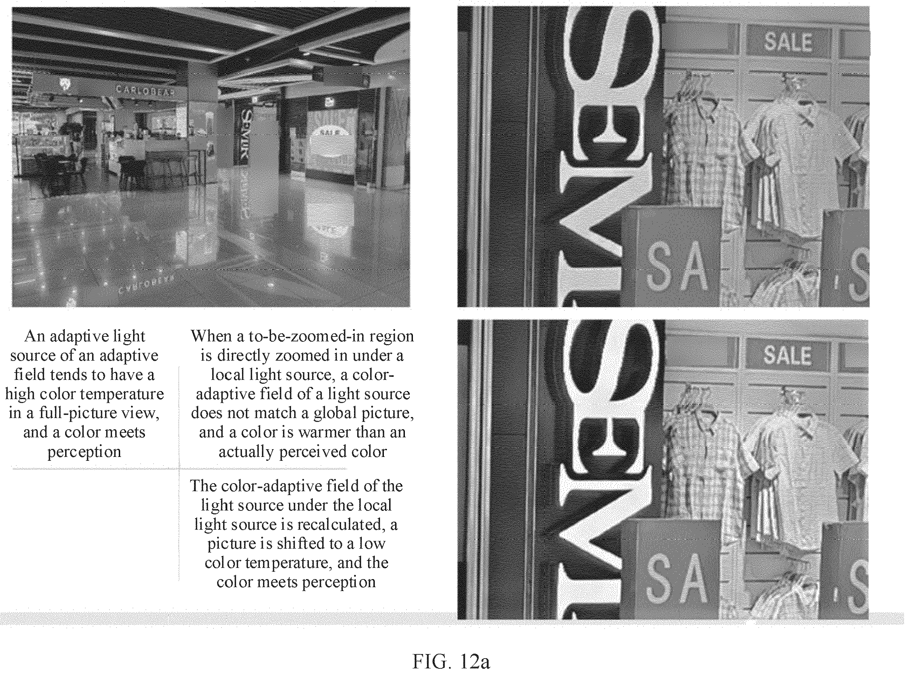

FIG. 12a is an example diagram of processing effect on the local picture. As shown in FIG. 12a, the to-be-zoomed-in region is a region that is of the to-be-processed picture and that includes a shirt, an adaptive light source of an adaptive field tends to have a high color temperature in a full-picture view, and a color meets perception. When the to-be-zoomed-in region is directly zoomed in, a color-adaptive field of the light source does not match the global picture, and the color is warmer than an actually perceived color. After the processed local picture is obtained by using the method in this embodiment of this application, a color-adaptive field of the light source under a local light source is recalculated, the picture is shifted to a low color temperature, and the color meets perception.

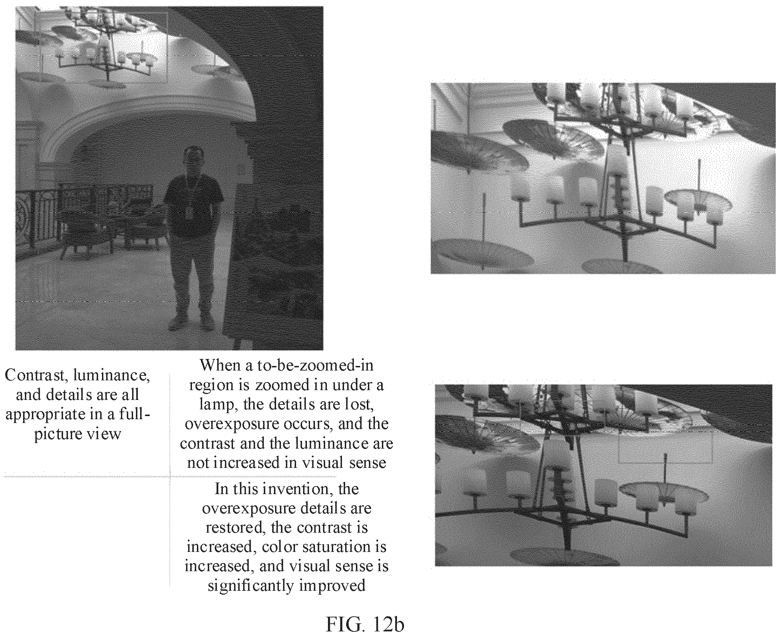

FIG. 12b is an example diagram of processing effect on the local picture. As shown in FIG. 12b, the to-be-zoomed-in region is a region that is of the to-be-processed picture and that includes a ceiling lamp, and contrast, luminance, and details are all appropriate in a full-picture view. When the to-be-zoomed-in region is directly zoomed in, the details are lost, overexposure occurs, and the contrast and the luminance are not increased in visual sense. After the processed local picture is obtained by using the method in this embodiment of this application, overexposure details are restored, the contrast is increased, color saturation is increased, and visual sense is significantly improved.

In addition, in this embodiment of this application, after completing the foregoing steps, the decoder side may obtain a zoom-in termination instruction, where the zoom-in termination instruction is generated through an inward sliding operation of two fingers of the user on the processed local picture, or the zoom-in termination instruction is generated through a tapping operation of a single finger of the user on the processed local picture; and then display the to-be-processed picture based on the zoom-in termination instruction.

To be specific, after viewing the processed and zoomed-in local picture, the user may perform an operation on the foregoing local picture to restore to the picture (the to-be-processed picture) before zooming in. The foregoing operation may be making a two-finger zoom-out gesture, by the thumb and the index finger, on the zoomed-in picture displayed on the screen of the mobile phone, or tapping, by the single finger, the zoomed-in picture displayed on the screen of the mobile phone. This is not specifically limited.

In this embodiment of this application, after capturing the to-be-processed picture, the encoder side obtains the plurality of groups of visual sensory experience parameters for the to-be-processed picture, and the encoder side encodes and sends the to-be-processed picture and the plurality of groups of visual sensory experience parameters to the decoder side. In this way, after determining the to-be-zoomed-in region based on a user operation, the decoder side may perform local picture processing based on the visual sensory experience parameter corresponding to the to-be-zoomed-in region, to obtain the processed local picture. A picture presented by the processed local picture is used to simulate (approximate or enhance) visual sensory experience for a real scene that is of the to-be-zoomed-in region and that is perceived by human eyes, and is like a picture seen when a person really walks into the real scene corresponding to the to-be-zoomed-in region. This resolves a problem that the zoomed-in picture is unclear and blurred, and can improve visual zoom-in experience of the user.

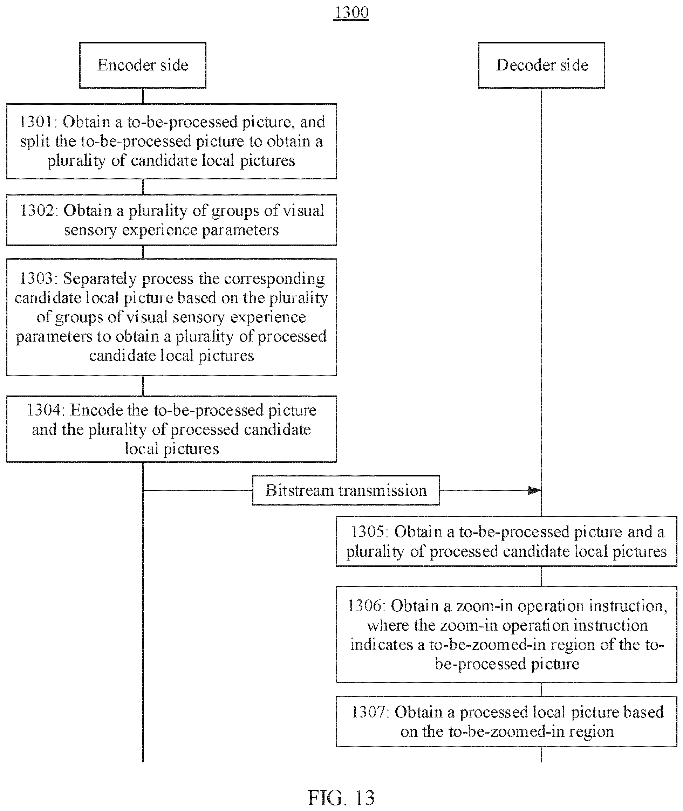

FIG. 13 is an example flowchart of a picture processing method according to this application. A process 1300 may be performed by an encoder side and a decoder side. For convenience, the encoder side and the decoder side are described together in the process 1300. In a specific implementation process, the encoder side and the decoder side may separately perform a corresponding step. The process 1300 is described as a series of steps or operations. It should be understood that the steps or operations of the process 1300 may be performed in various sequences and/or simultaneously, are not limited to an execution sequence shown in FIG. 13.

At the encoder side, the process 1300 includes the following steps.

1301: The encoder side obtains a to-be-processed picture, and splits the to-be-processed picture to obtain a plurality of candidate local pictures.

For step 1301, refer to step 701 in the embodiment shown in FIG. 7. Details are not described herein again.

1302: The encoder side obtains a plurality of groups of visual sensory experience parameters.

For step 1302, refer to step 702 in the embodiment shown in FIG. 7. Details are not described herein again.

1303: The encoder side separately processes the corresponding candidate local picture based on the plurality of groups of visual sensory experience parameters to obtain a plurality of processed candidate local pictures.

A difference from the embodiment of the shown in FIG. 7 lies in that, when obtaining the plurality of groups of visual sensory experience parameters, the encoder side separately processes the plurality of candidate local pictures to obtain the plurality of processed candidate local pictures. The plurality of groups of visual sensory experience parameters do not need to be transmitted to the decoder side, and the decoder side does not need to perform picture processing.

For picture processing performed on each candidate local picture by the encoder side, refer to the description of step 706 in the embodiment shown in FIG. 7. A difference lies in that, the decoder side separately processes one or more local regions included in a to-be-zoomed-in region in step 706, while the encoder side separately processes all candidate local regions in step 1303.

1304: The encoder side encodes the to-be-processed picture and the plurality of processed candidate local pictures.

For step 1304, refer to step 703 in the embodiment shown in FIG. 7. A difference lies in that, the encoder side only needs to encode the to-be-processed picture and the plurality of processed candidate local pictures, and does not need to generate corresponding metadata based on the visual sensory experience parameter.

In addition, before encoding the plurality of processed candidate local pictures, the encoder side may perform TM on each local region of the to-be-processed picture, to improve a similarity between the local region of the to-be-processed picture and the processed candidate local picture corresponding to the local region, and reduce an amount of residual data of the candidate local picture.

At the decoder side, the process 1300 includes the following steps.

1305: The decoder side obtains a to-be-processed picture and a plurality of processed candidate local pictures.

For step 1305, refer to step 704 in the embodiment shown in FIG. 7. Details are not described herein again.

1306: The decoder side obtains a zoom-in operation instruction, where the zoom-in operation instruction indicates a to-be-zoomed-in region of the to-be-processed picture.

For step 1306, refer to step 705 in the embodiment shown in FIG. 7. Details are not described herein again.

1307: The decoder side obtains a processed local picture based on the to-be-zoomed-in region.

The decoder side may decode a bitstream to obtain the plurality of processed candidate local pictures, and then obtain, from the bitstream, one or more processed local pictures corresponding to the to-be-zoomed-in region, namely, the processed candidate local pictures included in the to-be-zoomed-in region. In this case, these processed candidate local pictures are the one or more processed local pictures corresponding to the to-be-zoomed-in region.

A difference from the embodiment shown in FIG. 7 lies in that, because the candidate local pictures obtained through decoding of the decoder side are pictures processed by the encoder side, after obtaining the to-be-zoomed-in region, the decoder side determines, from the plurality of candidate local pictures, the one or more processed candidate local pictures corresponding to the to-be-zoomed-in region, and the one or more processed candidate local pictures directly form the processed local picture.

In this embodiment of this application, after capturing the to-be-processed picture, the encoder side obtains respective visual sensory experience parameters for the plurality of candidate local pictures in the to-be-processed picture, and then separately processes corresponding candidate local pictures based on the plurality of groups of visual sensory experience parameters to obtain the plurality of processed candidate local pictures. The encoder side encodes and sends the to-be-processed picture and the plurality of processed candidate local pictures to the decoder side. In this way, after determining the to-be-zoomed-in region based on a user operation, the decoder side directly performs decoding to obtain the processed local picture. A picture presented by the processed local picture is used to simulate (approximate or enhance) visual sensory experience for a real scene that is of the to-be-zoomed-in region and that is perceived by human eyes, and is like a picture seen when a person really walks into the real scene corresponding to the to-be-zoomed-in region. This resolves a problem that a zoomed-in picture is unclear and blurred, and can improve visual zoom-in experience of a user.

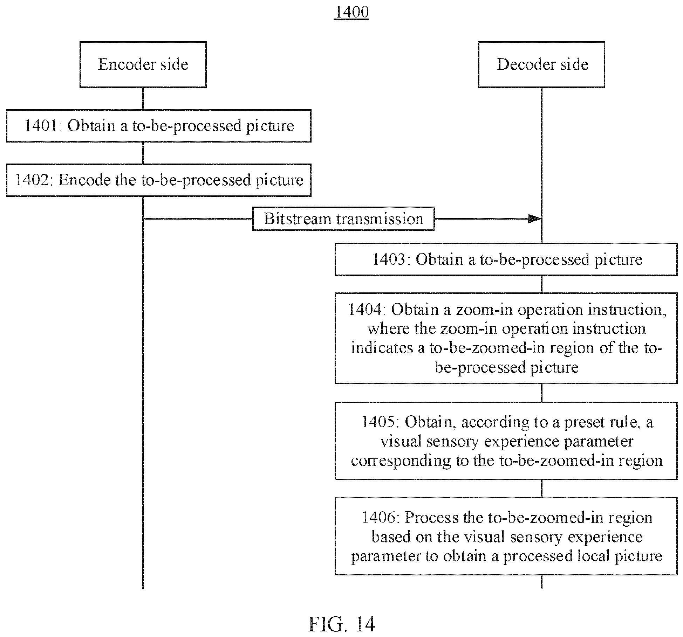

FIG. 14 is an example flowchart of a picture processing method according to this application. A process 1400 may be performed by an encoder side and a decoder side. For convenience, the encoder side and the decoder side are described together in the process 1400. In a specific implementation process, the encoder side and the decoder side may separately perform a corresponding step. The process 1400 is described as a series of steps or operations. It should be understood that the steps or operations of the process 1400 may be performed in various sequences and/or simultaneously, and are not limited to an execution sequence shown in FIG. 14.

At the encoder side, the process 1400 includes the following steps.

1401: The encoder side obtains a to-be-processed picture.

A difference between step 1401 and step 701 in the embodiment shown in FIG. 7 lies in that, after obtaining the to-be-processed picture (a global picture), the encoder side does not need to split the to-be-processed picture.

1402: The encoder side encodes the to-be-processed picture.

For an encoding scheme of the to-be-processed picture at the encoder side, refer to a JPEG encoding standard, a hybrid video encoding standard, or a scalable video encoding standard, or an end-to-end encoding scheme may be used. Details are not described herein again.

At the decoder side, the process 1400 includes the following steps.

1403: The decoder side obtains a to-be-processed picture.

For step 1403, refer to step 704 in the embodiment shown in FIG. 7. Details are not described herein again.

1404: The decoder side obtains a zoom-in operation instruction, where the zoom-in operation instruction indicates a to-be-zoomed-in region of the to-be-processed picture.

For step 1404, refer to step 705 in the embodiment shown in FIG. 7. Details are not described herein again.

1405: The decoder side obtains, according to a preset rule, a visual sensory experience parameter corresponding to the to-be-zoomed-in region.

In this embodiment of this application, the encoder side carries only the to-be-processed picture (namely, the global picture) in a bitstream, does not carry a plurality of candidate local pictures or a plurality of groups of visual sensory experience parameters, and does not partition the to-be-processed picture or perform a picture processing operation. Therefore, after parsing the bitstream, the decoder side can obtain only a global reconstructed picture. Therefore, if the decoder side is to process the to-be-zoomed-in region, the decoder side needs to obtain, based on historical data or experience information, the visual sensory experience parameter corresponding to the to-be-zoomed-in region.

The decoder side may first split the to-be-processed picture according to a first preset rule to obtain a plurality of candidate local pictures; obtain one or more local pictures corresponding to the to-be-zoomed-in region, where the plurality of candidate local pictures include the one or more local pictures; and then obtain, according to a second preset rule, one or more groups of visual sensory experience parameters corresponding to the one or more local pictures. The preset rule includes the first preset rule and the second preset rule.

The decoder side may first split the reconstructed global picture based on the description about the split manner in step 701 in the embodiment shown in FIG. 7, to obtain the plurality of candidate local pictures, and then determine the candidate local picture included in the to-be-zoomed-in region based on a position of the to-be-zoomed-in region, where the candidate local picture is a local picture corresponding to the to-be-zoomed-in region.

The decoder side may obtain one or more groups of visual sensory experience parameters in the following manner:

Luminance adjustment complies with the following principle: $\frac{{\sum }_{i = 0}^{whole pixel number} {\sum }_{j , k = 0}^{j , k E \left[M.N\right]} f \left(pixelvalue\left[i\right]\right)}{whole pixel number} = f \left(\frac{{\sum }_{i = 0}^{local pixel number} pixelvalue \left[i\right]}{local pixel number}\right)$

Whole pixel number indicates a quantity of pixels included in the global picture; local pixel number indicates a quantity of pixels included in the to-be-zoomed-in region; ${\sum }_{i = 0}^{local pixel number} pixelvalue \left[i\right]$ indicates an accumulated sum of pixel values in the to-be-zoomed-in region; and f() indicates an iteration rule that makes an equation true. For example, if the left of an equal sign is greater than the right of the equal sign, values of some pixels on the right of the equal sign are reduced, so that the equal sign is valid.

Contrast adjustment complies with the following principle: $\begin{matrix}\frac{{\sum }_{i = 0}^{whole pixel number} {\sum }_{j , k = 0}^{j , k E \left[M.N\right]} f 1 \left(pixelvalue\left[j\right]\left[k\right]\right)}{whole pixel number} \\ = f \left(\frac{{\sum }_{i = 0}^{local pixel number} {\sum }_{j , k = 0}^{j , k E \left[M.N\right]} f 1 \left(pixelvalue\left[j\right]\left[k\right]\right)}{local pixel number}\right)\end{matrix}$

For a position with different luminance, f1 is an operator for calculating contrast, for example, a Laplace operator, and ${Σ}_{j , k = 0}^{j , k E \left[M.N\right]}$ indicates an [M, N] window that uses pixel value coordinates (i, j) as the center.

Detail adjustment complies with the following principle: $\begin{matrix}\frac{{\sum }_{i = 0}^{whole pixel number} {\sum }_{j , k = 0}^{j , k E \left[M.N\right]} f 2 \left(pixelvalue\left[j\right]\left[k\right]\right)}{whole pixel number} \\ = f \left(\frac{{\sum }_{i = 0}^{local pixel number} {\sum }_{j , k = 0}^{j , k E \left[M.N\right]} f 2 \left(pixelvalue\left[j\right]\left[k\right]\right)}{local pixel number}\right)\end{matrix}$

For a position with different contrast, f2 is a detail extraction operator, for example, a sampling Sobel operator.

Color adjustment complies with the following principle: $\frac{{\sum }_{i = 0}^{whole pixel number} R / G , B / G}{whole pixel number} = f \left(\frac{{\sum }_{i = 0}^{local pixel number} {\sum }_{j , k = 0}^{j , k E \left[M.N\right]} f 3 \left(R/G, B/G\right)}{local pixel number}\right)$

R/B and B/G respectively indicate ratios of individual RGB components of each pixel value; and f3 is an adjustment method that makes an equation true. For example, the RGB component is multiplied by a corrected gain value for iteration.

It should be noted that in this embodiment of this application, the one or more groups of visual sensory experience parameters corresponding to the one or more local pictures may alternatively be obtained in another manner. This is not specifically limited herein.

1406: The decoder side processes the to-be-zoomed-in region based on the visual sensory experience parameter to obtain a processed local picture.

For step 1406, refer to step 707 in the embodiment shown in FIG. 7. Details are not described herein again.

In this embodiment of this application, after capturing the to-be-processed picture, the encoder side directly encodes the to-be-processed picture, and does not need to obtain a plurality of candidate local pictures of the to-be-processed picture and respective visual sensory experience parameters. This can reduce occupation of the bitstream. After determining the to-be-zoomed-in region based on a user operation, the decoder side may obtain one or more corresponding local pictures based on the to-be-zoomed-in region, obtain one or more groups of visual sensory experience parameters according to the preset rule, and then process the local picture based on these parameters to obtain the processed local picture. A picture presented by the processed local picture is used to simulate (approximate or enhance) visual sensory experience for a real scene that is of the to-be-zoomed-in region and that is perceived by human eyes, and is like a picture seen when a person really walks into the real scene corresponding to the to-be-zoomed-in region. This resolves a problem that a zoomed-in picture is unclear and blurred, and can improve visual zoom-in experience of a user.

With reference to the embodiment shown in FIG. 7 or FIG. 13, in this embodiment of this application, the encoder side may first process the plurality of candidate local pictures, then write the to-be-processed picture, the plurality of processed candidate local pictures, and the plurality of groups of visual sensory experience parameters into the bitstream, and transmit the bitstream to the decoder side. In this case, the visual sensory experience parameters may be divided into two parts. One part is used by the encoder side to process the plurality of candidate local pictures. In this way, the plurality of processed candidate local pictures have been adjusted from at least one of luminance, contrast, a color, and details, and good effect is obtained. The other part is written into the bitstream and transmitted to the decoder side for use, and is also used to process the plurality of candidate local pictures. In this way, after processing by the decoder side, the processed local picture can better meet a requirement of a display end, and achieve best display effect. Correspondingly, the visual sensory experience parameter transmitted to the decoder side may include luminance, contrast, and the like. The decoder side parses the bitstream, reconstructs the to-be-processed picture, the plurality of processed candidate local pictures, and the plurality of groups of visual sensory experience parameters, and processes the plurality of processed candidate local pictures again based on the plurality of groups of visual sensory experience parameters, to obtain the final processed local picture.

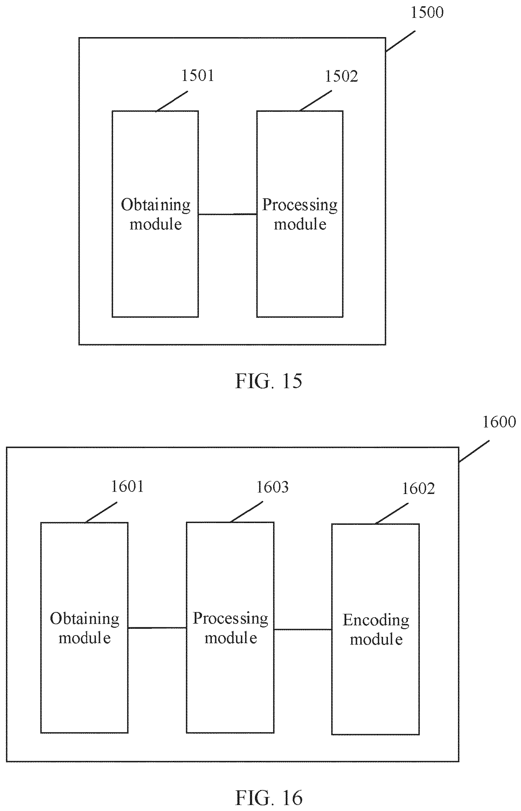

FIG. 15 is a schematic diagram of an example structure of a decoding apparatus 1500 according to an embodiment of this application. As shown in FIG. 15, the apparatus 1500 in this embodiment may be used in a decoder side device, or may be used in an electronic device having a decoder side function. The electronic device further has an encoder side function. The apparatus 1500 includes an obtaining module 1501 and a processing module 1502.

Optionally, the obtaining module 1501 is configured to: obtain a to-be-processed picture; obtain a zoom-in operation instruction, where the zoom-in operation instruction indicates a to-be-zoomed-in region of the to-be-processed picture, and the to-be-zoomed-in region corresponds to one or more local pictures; and obtain one or more groups of visual sensory experience parameters corresponding to the one or more local pictures. The processing module 1502 is configured to separately process the corresponding local picture based on the one or more groups of visual sensory experience parameters to obtain a processed local picture.

In a possible implementation, the visual sensory experience parameter includes at least one of a luminance parameter, a contrast parameter, a color parameter, and a detail parameter. The processing module 1502 is specifically configured to perform at least one of the following operations: when the visual sensory experience parameter includes a luminance parameter, performing luminance adjustment on the corresponding local picture; when the visual sensory experience parameter includes a contrast parameter, performing contrast adjustment on the corresponding local picture; when the visual sensory experience parameter includes a color parameter, performing color adjustment on the corresponding local picture; or when the visual sensory experience parameter includes a detail parameter, performing detail adjustment on the corresponding local picture. The corresponding local picture is one of the one or more local pictures.

In a possible implementation, the processing module 1502 is specifically configured to: when the corresponding local picture corresponds to a dark region of a picture, perform at least one of luminance improvement, contrast improvement, color adaptation for the dark region, and underexposure detail increase on the corresponding local picture; when the corresponding local picture corresponds to a bright region of a picture, perform at least one of luminance reduction, contrast reduction, color adaptation for the bright region, and overexposure detail increase on the corresponding local picture; or when the corresponding local picture corresponds to a picture subject region, perform color adaptation for a subject on the corresponding local picture. The corresponding local picture is one of the one or more local pictures.

In a possible implementation, the processing module 1502 is specifically configured to: obtain a plurality of reference pictures, where the plurality of reference pictures and the to-be-processed picture are obtained by shooting a same scene by a plurality of cameras; and perform detail adjustment on the corresponding local picture based on the plurality of reference pictures.

In a possible implementation, the processing module 1502 is specifically configured to: obtain a plurality of historical pictures whose similarities to the to-be-processed picture exceed a preset threshold, and perform detail adjustment on the corresponding local picture based on the plurality of historical pictures.

In a possible implementation, a picture presented by the processed local picture is used to simulate visual sensory experience for a real scene that is of the to-be-zoomed-in region and that is perceived by human eyes.

In a possible implementation, the zoom-in operation instruction is generated through an outward sliding operation of two fingers of a user on the to-be-zoomed-in region; or the zoom-in operation instruction is generated through a tapping operation of two fingers of a user on the to-be-zoomed-in region.

In a possible implementation, the obtaining module 1501 is specifically configured to decode an obtained bitstream to obtain the one or more groups of visual sensory experience parameters.

In a possible implementation, the obtaining module 1501 is specifically configured to: perform scalable video decoding on the obtained bitstream to obtain the to-be-processed picture, or perform picture decompression on an obtained picture file to obtain the to-be-processed picture.

In a possible implementation, the processing module 1502 is further configured to: display the processed local picture, or store the processed local picture.

In a possible implementation, the obtaining module 1501 is further configured to: obtain a zoom-in termination instruction, where the zoom-in termination instruction is generated through an inward sliding operation of two fingers of the user on the processed local picture, or the zoom-in termination instruction is generated through a tapping operation of a single finger of the user on the processed local picture. The processing module 1502 is further configured to display the to-be-processed picture based on the zoom-in termination instruction.

Optionally, the obtaining module 1501 is configured to: obtain a to-be-processed picture; obtain a zoom-in operation instruction, where the zoom-in operation instruction indicates a to-be-zoomed-in region of the to-be-processed picture; and obtain, according to a preset rule, a visual sensory experience parameter corresponding to the to-be-zoomed-in region. The processing module 1502 is configured to process the to-be-zoomed-in region based on the visual sensory experience parameter to obtain a processed local picture.

In a possible implementation, the visual sensory experience parameter includes at least one of a luminance parameter, a contrast parameter, a color parameter, and a detail parameter. The processing module 1502 is specifically configured to perform at least one of the following operations: when the visual sensory experience parameter includes a luminance parameter, performing luminance adjustment on the corresponding local picture; when the visual sensory experience parameter includes a contrast parameter, performing contrast adjustment on the corresponding local picture; when the visual sensory experience parameter includes a color parameter, performing color adjustment on the corresponding local picture; or when the visual sensory experience parameter includes a detail parameter, performing detail adjustment on the corresponding local picture. The corresponding local picture is one of the one or more local pictures.

In a possible implementation, the processing module 1502 is specifically configured to: when the corresponding local picture corresponds to a dark region of a picture, perform at least one of luminance improvement, contrast improvement, color adaptation for the dark region, and underexposure detail increase on the corresponding local picture; when the corresponding local picture corresponds to a bright region of a picture, perform at least one of luminance reduction, contrast reduction, color adaptation for the bright region, and overexposure detail increase on the corresponding local picture; or when the corresponding local picture corresponds to a picture subject region, perform color adaptation for a subject on the corresponding local picture. The corresponding local picture is one of the one or more local pictures.

In a possible implementation, the processing module 1502 is specifically configured to: obtain a plurality of reference pictures, where the plurality of reference pictures and the to-be-processed picture are obtained by shooting a same scene by a plurality of cameras; and perform detail adjustment on the corresponding local picture based on the plurality of reference pictures.

In a possible implementation, the processing module 1502 is specifically configured to: obtain a plurality of historical pictures whose similarities to the to-be-processed picture exceed a preset threshold, and perform detail adjustment on the corresponding local picture based on the plurality of historical pictures.

In a possible implementation, a picture presented by the processed local picture is used to simulate visual sensory experience for a real scene that is of the to-be-zoomed-in region and that is perceived by human eyes.

In a possible implementation, the zoom-in operation instruction is generated through an outward sliding operation of two fingers of a user on the to-be-zoomed-in region; or the zoom-in operation instruction is generated through a tapping operation of two fingers of a user on the to-be-zoomed-in region.

In a possible implementation, the obtaining module 1501 is specifically configured to: split the to-be-processed picture according to a first preset rule to obtain a plurality of candidate local pictures; obtain one or more local pictures corresponding to the to-be-zoomed-in region, where the plurality of candidate local pictures include the one or more local pictures; and obtain, according to a second preset rule, one or more groups of visual sensory experience parameters corresponding to the one or more local pictures. The preset rule includes the first preset rule and the second preset rule.

In a possible implementation, the obtaining module 1501 is specifically configured to: perform scalable video decoding on the obtained bitstream to obtain the to-be-processed picture, or perform picture decompression on an obtained picture file to obtain the to-be-processed picture.

In a possible implementation, the processing module 1502 is further configured to: display the processed local picture, or store the processed local picture.

In a possible implementation, the obtaining module 1501 is further configured to: obtain a zoom-in termination instruction, where the zoom-in termination instruction is generated through an inward sliding operation of two fingers of the user on the processed local picture, or the zoom-in termination instruction is generated through a tapping operation of a single finger of the user on the processed local picture. The processing module 1502 is further configured to display the to-be-processed picture based on the zoom-in termination instruction.

The apparatus in this embodiment may be used to perform the technical solution of the decoder side in the method embodiment shown in FIG. 7, FIG. 13, or FIG. 14. The implementation principles and technical effect are similar, and are not further described herein.

FIG. 16 is a schematic diagram of an example structure of an encoding apparatus 1600 according to an embodiment of this application. As shown in FIG. 16, the apparatus 1600 in this embodiment may be used in an encoder side device, or may be used in an electronic device having an encoder side function. The electronic device further has a decoder side function. The apparatus 1600 may include an obtaining module 1601, an encoding module 1602, and a processing module 1603.

Optionally, the obtaining module 1601 is configured to: obtain a to-be-processed picture, and obtain a plurality of groups of visual sensory experience parameters. The encoding module 1602 is configured to encode the to-be-processed picture and the plurality of groups of visual sensory experience parameters.

Optionally, the obtaining module 1601 is configured to: obtain a to-be-processed picture; split the to-be-processed picture to obtain a plurality of candidate local pictures; and obtain a plurality of groups of visual sensory experience parameters, where the plurality of groups of visual sensory experience parameters correspond to the plurality of candidate local pictures. The processing module 1603 is configured to separately process the corresponding candidate local picture based on the plurality of groups of visual sensory experience parameters to obtain a plurality of processed candidate local pictures. The encoding module 1602 is configured to encode the to-be-processed picture and the plurality of processed candidate local pictures.

In a possible implementation, the visual sensory experience parameter includes at least one of a luminance parameter, a contrast parameter, a color parameter, and a detail parameter. The processing module 1603 is specifically configured to perform at least one of the following operations: when the visual sensory experience parameter includes a luminance parameter, performing luminance adjustment on the corresponding local picture; when the visual sensory experience parameter includes a contrast parameter, performing contrast adjustment on the corresponding local picture; when the visual sensory experience parameter includes a color parameter, performing color adjustment on the corresponding local picture; or when the visual sensory experience parameter includes a detail parameter, performing detail adjustment on the corresponding local picture. The corresponding local picture is one of the plurality of candidate local pictures.

In a possible implementation, the processing module 1603 is specifically configured to: when the corresponding local picture corresponds to a dark region of a picture, perform at least one of luminance improvement, contrast improvement, color adaptation for the dark region, and underexposure detail increase on the corresponding local picture; when the corresponding local picture corresponds to a bright region of a picture, perform at least one of luminance reduction, contrast reduction, color adaptation for the bright region, and overexposure detail increase on the corresponding local picture; or when the corresponding local picture corresponds to a picture subject region, perform color adaptation for a subject on the corresponding local picture. The corresponding local picture is one of the plurality of candidate local pictures.

In a possible implementation, the processing module 1603 is specifically configured to: obtain a plurality of reference pictures, where the plurality of reference pictures and the to-be-processed picture are obtained by shooting a same scene by a plurality of cameras; and perform detail adjustment on the corresponding local picture based on the plurality of reference pictures.

In a possible implementation, the processing module 1603 is specifically configured to: obtain a plurality of historical pictures whose similarities to the to-be-processed picture exceed a preset threshold, and perform detail adjustment on the corresponding local picture based on the plurality of historical pictures.

In a possible implementation, the obtaining module 1601 is specifically configured to obtain the plurality of groups of visual sensory experience parameters according to a third preset rule.

In a possible implementation, the encoding module 1602 is specifically configured to: perform scalable video encoding on the to-be-processed picture and the plurality of processed candidate local pictures to obtain a bitstream, or perform picture compression on the to-be-processed picture and the plurality of processed candidate local pictures to obtain a picture file.

The apparatus in this embodiment may be used to perform the technical solution of the encoder side in the method embodiment shown in FIG. 7, FIG. 13, or FIG. 14. The implementation principles and technical effect are similar, and are not further described herein.

In an implementation process, the steps in the foregoing method embodiments may be completed by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps in the methods disclosed in embodiments of this application may be directly performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in the foregoing embodiments may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or all or some of the technical solutions may be implemented in a form of a software product. The computer software product is stored in a storage medium and includes several instructions for instructing a computer device (a personal computer, a server, a network device, or the like) to perform all or some of the steps of the methods in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A picture processing method, comprising:
obtaining a to-be-processed picture;
obtaining a zoom-in operation instruction, wherein the zoom-in operation instruction indicates a to-be-zoomed-in region of the to-be-processed picture, and the to-be-zoomed-in region corresponds to one or more local pictures;
obtaining one or more groups of visual sensory experience parameters corresponding to the one or more local pictures; and
separately processing the corresponding local picture based on the one or more groups of visual sensory experience parameters to obtain a processed local picture;
wherein the visual sensory experience parameter comprises a luminance parameter and a contrast parameter;
wherein the separately processing the corresponding local picture based on the one or more groups of visual sensory experience parameters to obtain a processed local picture comprises: performing luminance adjustment on the corresponding local picture; and, performing contrast adjustment on the corresponding local picture.

2. The method according to claim 1, wherein the visual sensory experience parameter further comprises at least one of a color parameter, and a detail parameter:
the separately processing the corresponding local picture based on the one or more groups of visual sensory experience parameters to obtain a processed local picture comprises at least one of the following:
when the visual sensory experience parameter comprises a color parameter, performing color adjustment on the corresponding local picture; or
when the visual sensory experience parameter comprises a detail parameter, performing detail adjustment on the corresponding local picture; and
the corresponding local picture is one of the one or more local pictures.

3. The method according to claim 1 or 2, wherein the separately processing the corresponding local picture based on the one or more groups of visual sensory experience parameters to obtain a processed local picture comprises:
when the corresponding local picture corresponds to a dark region of a picture, performing at least one of luminance improvement, contrast improvement, color adaptation for the dark region, and underexposure detail increase on the corresponding local picture;
when the corresponding local picture corresponds to a bright region of a picture, performing at least one of luminance reduction, contrast reduction, color adaptation for the bright region, and overexposure detail increase on the corresponding local picture; or
when the corresponding local picture corresponds to a picture subject region, performing color adaptation for a subject on the corresponding local picture; and
the corresponding local picture is one of the one or more local pictures.

4. The method according to claim 2, wherein the performing detail adjustment on the corresponding local picture comprises:
obtaining a plurality of reference pictures, wherein the plurality of reference pictures and the to-be-processed picture are obtained by shooting a same scene by a plurality of cameras; and
performing detail adjustment on the corresponding local picture based on the plurality of reference pictures.

5. The method according to claim 2, wherein the performing detail adjustment on the corresponding local picture comprises:
obtaining a plurality of historical pictures whose similarities to the to-be-processed picture exceed a preset threshold; and
performing detail adjustment on the corresponding local picture based on the plurality of historical pictures.

6. The method according to any one of claims 1 to 5, wherein a picture presented by the processed local picture is used to simulate visual sensory experience for a real scene that is of the to-be-zoomed-in region and that is perceived by human eyes.

7. The method according to any one of claims 1 to 6, wherein the zoom-in operation instruction is generated through an outward sliding operation of two fingers of a user on the to-be-zoomed-in region; or the zoom-in operation instruction is generated through a tapping operation of two fingers of a user on the to-be-zoomed-in region.

8. The method according to any one of claims 1 to 7, wherein the obtaining one or more groups of visual sensory experience parameters corresponding to the one or more local pictures comprises:
decoding an obtained bitstream to obtain the one or more groups of visual sensory experience parameters.

9. The method according to any one of claims 1 to 7, wherein the obtaining one or more groups of visual sensory experience parameters corresponding to the one or more local pictures comprises:
obtaining the one or more groups of visual sensory experience parameters according to a preset rule.

10. The method according to any one of claims 1 to 9, wherein the obtaining a to-be-processed picture comprises:
performing scalable video decoding on the obtained bitstream to obtain the to-be-processed picture; or
performing picture decompression on an obtained picture file to obtain the to-be-processed picture.

11. The method according to any one of claims 1 to 10, after the separately processing the corresponding local picture based on the one or more groups of visual sensory experience parameters to obtain a processed local picture, further comprising:
displaying the processed local picture; or
storing the processed local picture.

12. The method according to any one of claims 1 to 11, wherein the method further comprises:
obtaining a zoom-in termination instruction, wherein the zoom-in termination instruction is generated through an inward sliding operation of two fingers of the user on the processed local picture, or the zoom-in termination instruction is generated through a tapping operation of a single finger of the user on the processed local picture; and
displaying the to-be-processed picture based on the zoom-in termination instruction.

13. An electronic device, comprising:
one or more processors, and
a non-transitory computer-readable storage medium, coupled to the processor and storing a program executed by the processor, wherein when the program is executed by the processor, the electronic device is enabled to perform the method according to any one of claims 1 to 12.

14. A non-transitory computer-readable storage medium, comprising program code, wherein when the program code is executed by a computer device, the method according to any one of claims 1 to 12 is performed.

## Patentansprüche

1. Bildverarbeitungsverfahren, das umfasst:
Erhalten eines zu verarbeitenden Bilds;
Erhalten einer Vergrößerungsoperationsanweisung, wobei die Vergrößerungsoperationsanweisung einen zu vergrößernden Bereich des zu verarbeitenden Bilds angibt und der zu vergrößernde Bereich einem oder mehreren lokalen Bildern entspricht;
Erhalten einer oder mehrerer Gruppen von Parametern einer visuellen sensorischen Erfahrung, die dem einen oder den mehreren lokalen Bildern entsprechen; und
getrenntes Verarbeiten des entsprechenden lokalen Bilds basierend auf der einen oder den mehreren Gruppen von Parametern der visuellen sensorischen Erfahrung, um ein verarbeitetes lokales Bild zu erhalten;
wobei der Parameter der visuellen sensorischen Erfahrung einen Luminanzparameter und einen Kontrastparameter umfasst;
wobei das separate Verarbeiten des entsprechenden lokalen Bilds basierend auf der einen oder den mehreren Gruppen von Parametern der visuellen sensorischen Erfahrung, um ein verarbeitetes lokales Bild zu erhalten, umfasst:
Durchführen einer Luminanzanpassung an dem entsprechenden lokalen Bild;
und, Durchführen einer Kontrastanpassung an dem entsprechenden lokalen Bild.

2. Verfahren nach Anspruch 1, wobei der Parameter der visuellen sensorischen Erfahrung ferner mindestens einen von einem Farbparameter und einem Detailparameter umfasst;
das separate Verarbeiten des entsprechenden lokalen Bilds basierend auf der einen oder den mehreren Gruppen von Parametern der visuellen sensorischen Erfahrung, um ein verarbeitetes lokales Bild zu erhalten, mindestens eines der Folgenden umfasst:
wenn der Parameter der visuellen sensorischen Erfahrung einen Farbparameter umfasst, Durchführen einer Farbanpassung an dem entsprechenden lokalen Bild; oder wenn der Parameter der visuellen sensorischen Erfahrung einen Detailparameter umfasst, Durchführen einer Detailanpassung an dem entsprechenden lokalen Bild; und das entsprechende lokale Bild eines der einen oder der mehreren lokalen Bilder ist.

3. Verfahren nach Anspruch 1 oder 2, wobei das separate Verarbeiten des entsprechenden lokalen Bilds basierend auf der einen oder den mehreren Gruppen von Parametern der visuellen sensorischen Erfahrung, um ein verarbeitetes lokales Bild zu erhalten, umfasst:
wenn das entsprechende lokale Bild einem dunklen Bereich eines Bilds entspricht, Durchführen mindestens eines von einer Luminanzverbesserung, einer Kontrastverbesserung, der Farbanpassung für den dunklen Bereich und einer Erhöhung von Unterbelichtungsdetails an dem entsprechenden lokalen Bild;
wenn das entsprechende lokale Bild einem hellen Bereich eines Bilds entspricht, Durchführen von mindestens einem von einer Luminanzreduzierung, einer Kontrastreduzierung, der Farbanpassung für den hellen Bereich und der Erhöhung von Überbelichtungsdetails an dem entsprechenden lokalen Bild; oder wenn das entsprechende lokale Bild einem Bildmotivbereich entspricht, Durchführen der Farbanpassung für ein Motiv auf dem entsprechenden lokalen Bild; und das entsprechende lokale Bild eines der einen oder der mehreren lokalen Bilder ist.

4. Verfahren nach Anspruch 2, wobei das Durchführen der Detailanpassung an dem entsprechenden lokalen Bild umfasst:
Erhalten einer Vielzahl von Referenzbildern, wobei die Vielzahl von Referenzbildern und das zu verarbeitende Bild durch Aufnehmen einer selben Szene durch eine Vielzahl von Kameras erhalten werden; und
Durchführen der Detailanpassung an dem entsprechenden lokalen Bild basierend auf der Vielzahl von Referenzbildern.

5. Verfahren nach Anspruch 2, wobei das Durchführen der Detailanpassung an dem entsprechenden lokalen Bild umfasst:
Erhalten einer Vielzahl von historischen Bildern, deren Ähnlichkeiten mit dem zu verarbeitenden Bild einen vorgegebenen Schwellenwert überschreiten; und
Durchführen der Detailanpassung an dem entsprechenden lokalen Bild basierend auf der Vielzahl von historischen Bildern.

6. Verfahren nach einem der Ansprüche 1 bis 5, wobei ein Bild, das durch das verarbeitete lokale Bild dargestellt wird, verwendet wird, um eine visuelle sensorische Erfahrung für eine reale Szene, die zu dem zu vergrößernden Bereich gehört und die von menschlichen Augen wahrgenommen wird, zu simulieren.

7. Verfahren nach einem der Ansprüche 1 bis 6, wobei die Vergrößerungsoperationsanweisung durch eine nach außen gerichtete Gleitoperation von zwei Fingern eines Benutzers auf dem zu vergrößernden Bereich erzeugt wird; oder die Vergrößerungsoperationsanweisung durch eine Tippoperation von zwei Fingern eines Benutzers auf dem zu vergrößernden Bereich erzeugt wird.

8. Verfahren nach einem der Ansprüche 1 bis 7, wobei das Erhalten einer oder mehrerer Gruppen von Parametern der visuellen sensorischen Erfahrung, die dem einen oder den mehreren lokalen Bildern entsprechen, umfasst:
Decodieren eines erhaltenen Bitstroms, um die eine oder die mehreren Gruppen von visuellen sensorischen Erfahrungsparametern zu erhalten.

9. Verfahren nach einem der Ansprüche 1 bis 7, wobei das Erhalten einer oder mehrerer Gruppen von Parametern der visuellen sensorischen Erfahrung, die dem einen oder den mehreren lokalen Bildern entsprechen, umfasst:
Erhalten der einen oder mehreren Gruppen von Parametern der visuellen sensorischen Erfahrung gemäß einer vorgegebenen Regel.

10. Verfahren nach einem der Ansprüche 1 bis 9, wobei das Erhalten des zu verarbeitenden Bilds umfasst:
Durchführen einer skalierbaren Videodecodierung an dem erhaltenen Bitstrom, um das zu verarbeitende Bild zu erhalten; oder
Durchführen einer Bilddekomprimierung an einer erhaltenen Bilddatei, um das zu verarbeitende Bild zu erhalten.

11. Verfahren nach einem der Ansprüche 1 bis 10, das, nach dem separaten Verarbeiten des entsprechenden lokalen Bilds basierend auf der einen oder den mehreren Gruppen von Parametern der visuellen sensorischen Erfahrung, um ein verarbeitetes lokales Bild zu erhalten, ferner umfasst:
Anzeigen des verarbeiteten lokalen Bilds; oder
Speichern des verarbeiteten lokalen Bilds.

12. Verfahren nach einem der Ansprüche 1 bis 11, wobei das Verfahren ferner umfasst:
Erhalten einer Vergrößerungsbeendigungsanweisung, wobei die Vergrößerungsbeendigungsanweisung durch eine Einwärtsgleitoperation von zwei Fingern des Benutzers auf dem verarbeiteten lokalen Bild erzeugt wird, oder die Vergrößerungsbeendigungsanweisung durch eine Tippoperation eines einzelnen Fingers des Benutzers auf dem verarbeiteten lokalen Bild erzeugt wird; und Anzeigen des zu verarbeitenden Bilds basierend auf der Vergrößerungsbeendigungsanweisung.

13. Elektronische Vorrichtung, die umfasst:
einen oder mehrere Prozessoren; und
ein nichtflüchtiges computerlesbares Speichermedium, das mit dem Prozessor gekoppelt ist und ein Programm, das durch den Prozessor ausgeführt wird, speichert, wobei, wenn das Programm durch den Prozessor ausgeführt wird, die elektronische Vorrichtung in die Lage versetzt wird, das Verfahren nach einem der Ansprüche 1 bis 12 durchzuführen.

14. Nichtflüchtiges computerlesbares Speichermedium, das einen Programmcode umfasst, wobei, wenn der Programmcode durch eine Computervorrichtung ausgeführt wird, das Verfahren nach einem der Ansprüche 1 bis 12 durchgeführt wird.

## Revendications

1. Procédé de traitement d'image, comprenant :
l'obtention d'une image à traiter ;
l'obtention d'une instruction d'opération d'agrandissement, dans lequel l'instruction d'opération d'agrandissement indique une région à agrandir de l'image à traiter, et la région à agrandir correspond à une ou plusieurs images locales ;
l'obtention d'un ou de plusieurs groupes de paramètres d'expérience sensorielle visuelle correspondant à la ou aux images locales ; et
le traitement distinct de l'image locale correspondante sur la base du ou des groupes de paramètres d'expérience sensorielle visuelle pour obtenir une image locale traitée ;
dans lequel le paramètre d'expérience sensorielle visuelle comprend un paramètre de luminance et un paramètre de contraste ;
dans lequel le traitement distinct de l'image locale correspondante sur la base du ou des groupes de paramètres d'expérience sensorielle visuelle pour obtenir une image locale traitée comprend :
la réalisation d'un ajustement de luminance sur l'image locale correspondante ;
et la réalisation d'un ajustement de contraste sur l'image locale correspondante.

2. Procédé selon la revendication 1, dans lequel le paramètre d'expérience sensorielle visuelle comprend en outre au moins l'un parmi un paramètre de couleur et un paramètre de détail ;
le traitement distinct de l'image locale correspondante sur la base du ou des groupes de paramètres d'expérience sensorielle visuelle pour obtenir une image locale traitée comprend au moins l'une parmi les étapes suivantes :
lorsque le paramètre d'expérience sensorielle visuelle comprend un paramètre de couleur, la réalisation d'un ajustement de couleur sur l'image locale correspondante ; ou lorsque le paramètre d'expérience sensorielle visuelle comprend un paramètre de détail, la réalisation d'un ajustement de détail sur l'image locale correspondante ; et l'image locale correspondante est l'une parmi la ou les images locales.

3. Procédé selon la revendication 1 ou 2, dans lequel le traitement distinct de l'image locale correspondante sur la base du ou des groupes de paramètres d'expérience sensorielle visuelle pour obtenir une image locale traitée comprend :
lorsque l'image locale correspondante correspond à une région sombre d'une image,
la réalisation d'au moins l'une parmi une amélioration de luminance, une amélioration de contraste, une adaptation de couleur pour la région sombre, et une augmentation de détail de sous-exposition sur l'image locale correspondante ;
lorsque l'image locale correspondante correspond à une région claire d'une image, la réalisation d'au moins l'une parmi une réduction de luminance, une réduction de contraste, une adaptation de couleur pour la région claire, et une augmentation de détail de surexposition sur l'image locale correspondante ; ou
lorsque l'image locale correspondante correspond à une région de sujet d'image, la réalisation d'une adaptation de couleur pour un sujet sur l'image locale correspondante ; et l'image locale correspondante est l'une parmi la ou les images locales.

4. Procédé selon la revendication 2, dans lequel la réalisation d'un ajustement de détail sur l'image locale correspondante comprend :
l'obtention d'une pluralité d'images de référence, dans lequel la pluralité d'images de référence et l'image à traiter sont obtenues en effectuant une prise de vues d'une même scène par une pluralité de caméras ; et
la réalisation d'un ajustement de détail sur l'image locale correspondante sur la base de la pluralité d'images de référence.

5. Procédé selon la revendication 2, dans lequel la réalisation d'un ajustement de détail sur l'image locale correspondante comprend :
l'obtention d'une pluralité d'images historiques dont des similarités avec l'image à traiter dépassent un seuil prédéfini ; et
la réalisation d'un ajustement de détail sur l'image locale correspondante sur la base de la pluralité d'images historiques.

6. Procédé selon l'une quelconque des revendications 1 à 5, dans lequel une image présentée par l'image locale traitée est utilisée pour simuler une expérience sensorielle visuelle pour une scène réelle qui appartient à la région à agrandir et qui est perçue par des yeux humains.

7. Procédé selon l'une quelconque des revendications 1 à 6, dans lequel l'instruction d'opération d'agrandissement est générée par le biais d'une opération de glissement vers l'extérieur de deux doigts d'un utilisateur sur la région à agrandir ; ou l'instruction d'opération d'agrandissement est générée par le biais d'une opération de tapotement de deux doigts d'un utilisateur sur la région à agrandir.

8. Procédé selon l'une quelconque des revendications 1 à 7, dans lequel l'obtention d'un ou de plusieurs groupes de paramètres d'expérience sensorielle visuelle correspondant à la ou aux images locales comprend :
le décodage d'un flux binaire obtenu pour obtenir le ou les groupes de paramètres d'expérience sensorielle visuelle.

9. Procédé selon l'une quelconque des revendications 1 à 7, dans lequel l'obtention d'un ou de plusieurs groupes de paramètres d'expérience sensorielle visuelle correspondant à la ou aux images locales comprend :
l'obtention du ou des groupes de paramètres d'expérience sensorielle visuelle selon une règle prédéfinie.

10. Procédé selon l'une quelconque des revendications 1 à 9, dans lequel l'obtention d'une image à traiter comprend :
la réalisation d'un décodage vidéo évolutif sur le flux binaire obtenu pour obtenir l'image à traiter ; ou
la réalisation d'une décompression d'image sur un fichier image obtenu pour obtenir l'image à traiter.

11. Procédé selon l'une quelconque des revendications 1 à 10, après le traitement distinct de l'image locale correspondante sur la base du ou des groupes de paramètres d'expérience sensorielle visuelle pour obtenir une image locale traitée, comprenant en outre :
l'affichage de l'image locale traitée ; ou
le stockage de l'image locale traitée.

12. Procédé selon l'une quelconque des revendications 1 à 11, dans lequel le procédé comprend en outre :
l'obtention d'une instruction de fin d'agrandissement, dans lequel l'instruction de fin d'agrandissement est générée par le biais d'une opération de glissement vers l'intérieur de deux doigts de l'utilisateur sur l'image locale traitée, ou l'instruction de fin d'agrandissement est générée par le biais d'une opération de tapotement d'un seul doigt de l'utilisateur sur l'image locale traitée ; et
l'affichage de l'image à traiter sur la base de l'instruction de fin d'agrandissement.

13. Dispositif électronique, comprenant :
un ou plusieurs processeurs ; et
un support de stockage non transitoire lisible par ordinateur, couplé au processeur et stockant un programme exécuté par le processeur, dans lequel, lorsque le programme est exécuté par le processeur, le dispositif électronique est activé pour réaliser le procédé selon l'une quelconque des revendications 1 à 12.

14. Support de stockage non transitoire lisible par ordinateur, comprenant un code de programme, dans lequel, lorsque le code de programme est exécuté par un dispositif informatique, le procédé selon l'une quelconque des revendications 1 à 12 est réalisé.
